# EUROPEAN PATENT APPLICATION

(11) **EP 4 651 267 A1**
(43) Date of publication of application: **19.11.2025**
(21) Application number: 23916782.8
(22) Date of filing: 19.01.2023
(51) Int. Cl.: H01M 10/613, H01M 10/617, H01M 10/6557

(54) **HEAT EXCHANGE ASSEMBLY, BATTERY, VEHICLE, AND ELECTRIC DEVICE**

(71) Applicant: Contemporary Amperex Intelligence Technology (Shanghai) Limited, Shanghai 201306 (CN); Contemporary Amperex Technology Co., Limited, Ningde, Fujian 352100 (CN)
(72) Inventor: LIU, Zheng, Shanghai 201306 (CN); ZHAO, Yu, Shanghai 201306 (CN)
(74) Representative: Gong, Jinping
(86) International application number: PCT/CN2023/073159
(87) International publication number: WO 2024/152302

(57) **Abstract**

The present application provides a heat exchange assembly (1), a battery (1200), a vehicle (1000), and an electric device. The heat exchange assembly (1) includes an inflow pipe assembly (300), an outflow pipe assembly (400), at least one first heat exchange member (100), and at least one second heat exchange member (200). The first heat exchange member (100) is configured with a first heat exchange space (1001) as well as a first inflow end (111) and a first outflow end (131) that are both in communication with the first heat exchange space (1001). The second heat exchange member (200) is configured with a second heat exchange space (210) as well as a second inflow end (220) and a second outflow end (230) that are both in communication with the second heat exchange space (210). The first heat exchange member (100) and the second heat exchange member (200) are arranged alternately, and an accommodation space (1002) configured between an adjacent first heat exchange member (100) and second heat exchange member (200). The first inflow end (111) and the second outflow end (230) are located on the same side of the first heat exchange member (100), and the second inflow end (220) and the first outflow end (131) are located on the same other side of the first heat exchange member (100). The first inflow end (111) and the second inflow end (220) are both in communication with the inflow pipe assembly (300). The first outflow end (131) and the second outflow end (230) are both in communication with the outflow pipe assembly (400). The heat exchange assembly (1) can reduce the temperature difference between battery units in the same row.

## Description

### TECHNICAL FIELD

The present application relates to the field of battery heat exchange technologies, and specifically, to a heat exchange assembly, a battery, a vehicle, and an electric device.

### BACKGROUND

Batteries cannot function normally under excessively high or low temperatures, so temperature control of the batteries is required. In some scenarios, a battery employs heat exchange members to dissipate heat from battery units, so as to achieve the purpose of battery temperature control. Typically, a plurality of heat exchange members and a plurality of rows of battery units are arranged alternately within the battery. However, during battery operation, significant temperature differences exist among battery units in the same row, thereby affecting the performance of the battery.

### SUMMARY

An objective of embodiments of the present application is to provide a heat exchange assembly, a battery, a vehicle, and an electric device, including but not limited to addressing the technical problem of significant temperature differences among battery units in the same row.

The following technical solutions are used in the embodiments of the present application.

According to a first aspect, a heat exchange assembly is provided. The heat exchange assembly includes: an inflow pipe assembly, an outflow pipe assembly, at least one first heat exchange member, and at least one second heat exchange member, where the first heat exchange member is configured with a first inflow end, a first outflow end, and a first heat exchange space for a heat exchange medium to flow, and the first inflow end and the first outflow end are both in communication with the first heat exchange space; the second heat exchange member is configured with a second inflow end, a second outflow end, and a second heat exchange space for the heat exchange medium to flow, and the second inflow end and the second outflow end are both in communication with the second heat exchange space; the first heat exchange member and the second heat exchange member are arranged alternately, and an accommodation space is configured between an adjacent first heat exchange member and second heat exchange member; the first inflow end and the second outflow end are located on the same side of the first heat exchange member, and the second inflow end and the first outflow end are located on the same other side of the first heat exchange member; the first inflow end and the second inflow end are both in communication with the inflow pipe assembly; and the first outflow end and the second outflow end are both in communication with the outflow pipe assembly.

During operation of the heat exchange assembly of this embodiment of the present application, the heat exchange medium in the first heat exchange member flows from the first inflow end to the first outflow end, while the heat exchange medium in the second heat exchange member flows from the second inflow end to the second outflow end. Since the first inflow end and the second outflow end are located on the same side of the first heat exchange member, and the second inflow end and the first outflow end are located on the same other side of the first heat exchange member, a flow direction of the heat exchange medium in the first heat exchange member is opposite to a flow direction of the heat exchange medium in the second heat exchange member. The heat exchange effect on one side of a row of battery units decreases in a direction from the first inflow end toward the first outflow end, while the heat exchange effect on the other side increases in a direction from the first inflow end toward the first outflow end, resulting in a uniform overall heat exchange effect for the row of battery units. This improves the temperature difference between battery units in the same row of battery units, enhancing the performance of the battery.

In an embodiment, the first heat exchange member includes a first manifold, a heat exchange body, and a second manifold, the heat exchange body being connected between the first manifold and the second manifold, the heat exchange body being configured with the first heat exchange space, the first manifold being configured with an inflow channel and the first inflow end, and the second manifold being configured with an outflow channel and the first outflow end; where the inflow channel communicates the first inflow end with the first heat exchange space; and the outflow channel communicates the first outflow end with the first heat exchange space.

In the heat exchange assembly of the embodiments of the present application, the first heat exchange member employs a structural form including the first manifold, the heat exchange body, and the second manifold, which features simple structure and facilitates processing and manufacturing.

In an embodiment, the first heat exchange space is configured with multiple heat exchange channels for communicating the inflow channel and the outflow channel, where the inflow channel, the heat exchange channels, and the outflow channel are arranged along a height direction of the first heat exchange member, the inflow channel extends from the first inflow end along a length direction of the first heat exchange member toward the first outflow end, the outflow channel extends from the first outflow end along the length direction of the first heat exchange member toward the first inflow end, and the plurality of heat exchange channels are arranged at intervals along the length direction of the first heat exchange member.

In the heat exchange assembly of this embodiment of the present application, the heat exchange medium can flow along the entire length direction of the first heat exchange member, thereby enabling heat exchange with all battery units in the same row of battery units.

In an embodiment, the heat exchange channels extend along the height direction of the first heat exchange member.

In the heat exchange assembly of this embodiment of the present application, the first heat exchange member has a regular structure, making the processing and manufacturing of the first heat exchange member simple.

In an embodiment, the plurality of heat exchange channels have the same width.

In the heat exchange assembly of this embodiment of the present application, the plurality of heat exchange channels have the same width, so the first heat exchange member has a regular structure, facilitating processing and manufacturing.

In an embodiment, some of the heat exchange channels each are provided with a sealing member for sealing the heat exchange channel; the heat exchange body is divided into a plurality of heat exchange segments along the length direction of the first heat exchange member; and in the flow direction of the heat exchange medium in the inflow channel, the number of sealing members in the heat exchange segments gradually decreases.

In the heat exchange assembly of this embodiment of the present application, the uniformity of the flow distribution of the heat exchange medium in the heat exchange body can be improved, and the temperature difference between battery units in the same row is reduced.

In an embodiment, the sealing members in at least one of the heat exchange segments are arranged at uniform intervals.

In the heat exchange assembly of this embodiment of the present application, the sealing members are uniformly distributed, facilitating processing and manufacturing.

In an embodiment, in the flow direction of the heat exchange medium in the inflow channel, the widths of the heat exchange channels gradually increase.

In the heat exchange assembly of this embodiment of the present application, the uniformity of the flow distribution of the heat exchange medium in the heat exchange body can be improved, and the temperature difference between battery units in the same row is reduced.

In an embodiment, the outflow channel is located above the heat exchange channels, and the inflow channel is located below the heat exchange channels.

The heat exchange assembly of this embodiment of the present application is designed such that a liquid heat exchange medium flows from bottom to top, facilitating the discharge of gas within the liquid heat exchange medium and contributing to improving the heat exchange efficiency of the first heat exchange member.

In an embodiment, the first manifold and the heat exchange body are of a split structure; and/or the second manifold and the heat exchange body are of a split structure.

In the heat exchange assembly of this embodiment of the present application, the processing and manufacturing of the first heat exchange member are simplified.

In an embodiment, a portion of an end of the first manifold protruding outside the heat exchange body forms the first inflow end; and/or, a portion of an end of the second manifold protruding outside the heat exchange body forms the first outflow end.

In the heat exchange assembly of this embodiment of the present application, the volume of the heat exchange assembly can be reduced, contributing to an increase in the energy density of the battery.

In an embodiment, the first outflow end is higher than the first inflow end; and/or the second outflow end is higher than the second inflow end.

In the heat exchange assembly of this embodiment of the present application, such a design facilitates the discharge of gas within a liquid heat exchange medium and contributes to improving the heat exchange efficiency of the first heat exchange member.

In an embodiment, the first heat exchange member and the second heat exchange member are rotationally symmetric.

In the heat exchange assembly of this embodiment of the present application, component versatility is improved, manufacturing difficulty and cost are lowered, and the temperature difference between battery units in the same row can be effectively reduced.

In an embodiment, the inflow pipe assembly includes a first inflow pipe and a second inflow pipe, the first inflow pipe being in communication with the first inflow end, and the second inflow pipe being in communication with the second inflow end.

The heat exchange assembly of this embodiment of the present application has a simple and convenient pipe layout.

In an embodiment, the first heat exchange member is provided in plurality, the second heat exchange members is provided in plurality, and an alternating arrangement direction of the first heat exchange members and the second heat exchange members is a first direction; the first inflow pipe extends along the first direction and is sequentially in communication with each of the first inflow ends; and the second inflow pipe extends along the first direction and is sequentially in communication with each of the second inflow ends.

The heat exchange assembly of this embodiment of the present application has a simple pipe layout, making the processing and manufacturing of the heat exchange assembly straightforward.

In an embodiment, the first inflow pipe is configured with a first inflow port, the first inflow end is configured with a first inflow space communicating the first inflow pipe with the first heat exchange space, and a first baffle plate is provided in the first inflow space close to the first inflow port to increase a resistance to the heat exchange medium flowing into the first heat exchange space; and/or the second inflow pipe is configured with a second inflow port, the second inflow end is configured with a second inflow space communicating the second inflow pipe with the second heat exchange space, and a second baffle plate is provided in the second inflow space close to the second inflow port to increase a resistance to the heat exchange medium flowing into the second heat exchange space.

In the heat exchange assembly of this embodiment of the present application, the uneven distribution of the heat exchange medium is mitigated, the uniformity of the heat exchange medium distribution is improved, and the temperature difference between battery units in different rows is reduced.

In an embodiment, the flow direction of the heat exchange medium in the first inflow pipe is opposite to the flow direction of the heat exchange medium in the second inflow pipe.

In the heat exchange assembly of this embodiment of the present application, the uneven distribution of the heat exchange medium is mitigated, the uniformity of the heat exchange medium distribution is improved, and the temperature difference between battery units in different rows is reduced.

In an embodiment, the heat exchange assembly further includes a connecting pipe, the first inflow pipe being configured with a first inflow port for the heat exchange medium to flow into the first inflow pipe, and the second inflow pipe being configured with a second inflow port for the heat exchange medium to flow into the second inflow pipe; and one end of the connecting pipe is in communication with the first inflow port, and the other end of the connecting pipe and the second inflow port are located on the same side of the heat exchange assembly.

The heat exchange assembly of this embodiment of the present application allows the heat exchange medium to be introduced into the connecting pipe and the second inflow port from the same side of the heat exchange assembly, facilitating pipe distribution and reducing assembly difficulty.

In an embodiment, the outflow pipe assembly includes a first outflow pipe and a second outflow pipe, the first outflow pipe being in communication with the first outflow end, the second outflow pipe being in communication with the second outflow end, and the first inflow pipe, the second outflow pipe, and the first inflow end all being located on the same side of the first heat exchange member.

The heat exchange assembly of this embodiment of the present application has a simple structure, facilitating the processing and manufacturing of the heat exchange assembly.

In an embodiment, the first inflow pipe, the connecting pipe, and the second outflow pipe are distributed along the height direction of the first heat exchange member, with the connecting pipe located between the first inflow pipe and the second outflow pipe.

The heat exchange assembly of this embodiment of the present application has good structural compactness, contributing to an increase in the energy density of the battery.

In an embodiment, the connecting pipe is configured with a bent end bending toward and being in communication with the first inflow port.

In the heat exchange assembly of this embodiment of the present application, the operation for pipe connection between the connecting pipe and the first inflow pipe is simple, and the pipe layout is simple and compact, which contributes to reducing the volume of the heat exchange assembly 1 and increasing the energy density of the battery.

In an embodiment, the second inflow pipe, the first outflow pipe, and the second inflow end are all located on the same side of the first heat exchange member.

The heat exchange assembly of this embodiment of the present application has a simple structure, facilitating the processing and manufacturing of the heat exchange assembly.

In an embodiment, the second inflow pipe and the first outflow pipe are distributed along the height direction of the first heat exchange member.

The heat exchange assembly of this embodiment of the present application has good structural compactness, contributing to an increase in the energy density of the battery.

According to a second aspect, a battery is provided. The battery includes the heat exchange assembly described above.

The battery of the embodiments of the present application employs the heat exchange assembly described above, resulting in small temperature differences between battery units in the same row of battery units, which contributes to improving the performance of the battery.

According to a third aspect, a vehicle is provided. The vehicle includes the battery described above.

The vehicle of the embodiments of the present application employs the battery described above, which has good heat exchange performance, contributing to improving the performance of the battery 1100 and enhancing the performance of the vehicle.

According to a fourth aspect, an electric device is provided. The electric device includes the battery described above.

The electric device of this embodiment of the present application employs the battery described above. The battery has good performance, which also contributes to improving the performance of the electric device.

### BRIEF DESCRIPTION OF DRAWINGS

To describe the technical solutions in the embodiments of the present application more clearly, the following briefly describes the accompanying drawings required for describing the embodiments or the prior art. Apparently, the accompanying drawings in the following description show merely some embodiments of the present application, and persons of ordinary skill in the art may derive other drawings from these accompanying drawings without creative efforts.
FIG. 1 is a schematic structural diagram of a vehicle provided by an embodiment of the present application.
FIG. 2 is an exploded schematic diagram of a battery provided by an embodiment of the present application.
FIG. 3 is an exploded schematic diagram of a battery cell provided by an embodiment of the present application.
FIG. 4 is a schematic structural diagram of a heat exchange assembly from one perspective provided by an embodiment of the present application.
FIG. 5 is a schematic structural diagram of the heat exchange assembly shown in FIG. 4 from another perspective.
FIG. 6 is a schematic structural diagram of the first heat exchange member shown in FIG. 4 from one perspective.
FIG. 7 is a schematic structural diagram of the first heat exchange member shown in FIG. 6 from another perspective.
FIG. 8 is a cross-sectional view along line A-A in FIG. 7.
FIG. 9 is an enlarged view at C in FIG. 8.
FIG. 10 is a schematic cross-sectional diagram of the first heat exchange member in a heat exchange assembly provided by an embodiment of the present application.
FIG. 11 is a schematic structural diagram of the second heat exchange member shown in FIG. 4 from one perspective.
FIG. 12 is a schematic structural diagram of the second heat exchange member shown in FIG. 11 from another perspective.
FIG. 13 is a cross-sectional view along line B-B in FIG. 12.
FIG. 14 is an enlarged view at D in FIG. 13.
FIG. 15 is a schematic cross-sectional diagram of the second heat exchange member in a heat exchange assembly provided by an embodiment of the present application.
FIG. 16 is a schematic structural diagram of a heat exchange assembly provided by an embodiment of the present application.

Description of reference signs:
1000: vehicle; 1100: battery; 1200: controller; 1300: motor; 10: box; 11: first portion; 12: second portion; 20: battery cell; 21: end cover; 22: housing; 23: electrode assembly;
1: heat exchange assembly; 100: first heat exchange member; 110: first manifold; 111: first inflow end; 1111: first inflow space; 1112: first opening; 112: inflow channel; 120: heat exchange body; 121: heat exchange segment; 122: heat exchange channel; 123: partition; 130: second manifold; 131: first outflow end; 132: outflow channel; 1001: first heat exchange space; 1002: accommodation space; 200: second heat exchange member; 210: second heat exchange space; 220: second inflow end; 230: second outflow end; 221: second inflow space; 222: second opening; 300: inflow pipe assembly; 310: first inflow pipe; 311: first inflow port; 320: second inflow pipe; 321: second inflow port; 400: outflow pipe assembly; 410: first outflow pipe; 420: second outflow pipe; 510: sealing member; 520: first baffle plate; 530: second baffle plate; 610: connecting pipe; and 611: bent end.

### DESCRIPTION OF EMBODIMENTS

The embodiments of the present application are described in detail below. Examples of the embodiments are shown in the accompanying drawings, and the same or similar reference signs indicate the same or similar components or components with the same or similar functions. The embodiments described below with reference to the drawings are exemplary and aim to explain the present application, but cannot be understood as a limitation of the present application.

In the descriptions of the present application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings, are merely intended to facilitate the descriptions of the present application and simplify the descriptions, are not intended to indicate or imply that the apparatuses or components mentioned in the present application must have specific orientations, or be constructed and operated for a specific orientation, and therefore shall not be construed as a limitation to the present application.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of the present application, "a plurality of" means two or more than two unless otherwise specifically stated.

In the description of the present application, unless otherwise specified and defined explicitly, the terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the present application as appropriate to specific situations.

In the description of the present application, it should be noted that the term "and/or" is only an associative relationship for describing associated objects, indicating that three relationships may be present. For example, A and/or B may indicate the following three cases: presence of only A; presence of both A and B; and presence of only B.

It should also be noted that, in the embodiments of the present application, the same reference sign denotes the same component or part. For identical parts in the embodiments of the present application, the drawings may only label one part or component as an example, and it should be understood that the reference sign applies equally to other identical parts or components.

In this specification, the terms "an embodiment", "some embodiments", "an example", "a specific example", or "some examples" mean that a specific feature, structure, material or characteristic described with reference to the embodiment or example is included in at least one embodiment or example of the present application. In this specification, illustrative expressions of these terms do not necessarily refer to the same embodiment or example. Moreover, the specific feature, structure, material, or characteristic described may be combined in any suitable manner in any one or more embodiments or examples. In addition, without mutual conflict, those skilled in the art may incorporate and combine different embodiments or examples and features of the different embodiments or examples described in this specification.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

Batteries cannot function normally under excessively high or low temperatures, so temperature control of the batteries is required.

In some scenarios, a battery employs heat exchange members to dissipate heat from battery units, so as to achieve the purpose of battery temperature control. Typically, a plurality of heat exchange members and a plurality of rows of battery units are arranged alternately at intervals within the battery, with one row of battery units disposed between two adjacent heat exchange members. One row of battery units includes a plurality of battery units, but the heat exchange effects of individual battery units differ, resulting in temperature differences between battery units within the same row of battery units.

The applicant has found that one of the main reasons for the differing heat exchange effects of battery units in the same row of battery units is that, in the heat exchange members located on opposite sides of the same row of battery units, the heat exchange medium flows into the heat exchange members from a first end on the same side of both heat exchange members and flows out from a second end on the same other side of both heat exchange members. As the heat exchange medium flows from the first end to the second end, it sequentially exchanges heat with individual battery units in this row of battery units, with the heat exchange effect progressively deteriorating. Consequently, the heat exchange effect of battery units close to the first end is superior to that of battery units close to the second end, leading to significant temperature differences between battery units in the same row of battery units, thereby affecting the performance of the battery.

Specifically, when the temperatures of the heat exchange medium entering the heat exchange members are lower than the temperatures of the battery units, the heat exchange medium sequentially absorbs heat from the individual battery units as it flows from the first end to the second end, causing the temperature of the heat exchange medium to increase progressively. Thus, the heat exchange medium exchanging heat with battery units close to the first end has a lower temperature, resulting in better heat exchange and cooling effects and lower temperatures. Conversely, the heat exchange medium exchanging heat with battery units close to the second end has a higher temperature, leading to poorer heat exchange and cooling effects and higher temperatures. Similarly, when the temperatures of the heat exchange medium entering the heat exchange members are higher than the temperatures of the battery units, the heat exchange medium sequentially exchanges heat with the individual battery units as it flows from the first end to the second end, causing the temperature of the heat exchange medium to decrease progressively. Thus, the heat exchange medium exchanging heat with battery units close to the first end has a higher temperature, resulting in better heat exchange and heating effects and higher temperatures, while the heat exchange medium exchanging heat with battery units close to the second end has a lower temperature, leading to poorer heat exchange and heating effects and lower temperatures. This results in temperature differences between battery units within the same row of battery units.

To reduce the temperature differences between battery units in the same row of battery units, the applicant, through in-depth research, has designed a heat exchange assembly. By configuring a first inflow end of a first heat exchange member and a second outflow end of a second heat exchange member to be located on the same side of the first heat exchange member, and a second inflow end of the second heat exchange member and a first outflow end of the first heat exchange member to be located on the same other side of the first heat exchange member, a flow direction of the heat exchange medium in the first heat exchange member is opposite to that in the second heat exchange member. The directions of increasing heat exchange effects on opposite sides of a row of battery units are opposite, resulting in a uniform overall heat exchange effect for this row of battery units, thereby reducing the temperature difference between battery units in the same row of battery units and improving the performance of the battery.

An embodiment of the present application discloses a heat exchange assembly, a battery, and an electric device that uses the battery as a power source. The electric device may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric device according to an embodiment of the present application being a vehicle 1000 is used as an example for description of the following embodiments.

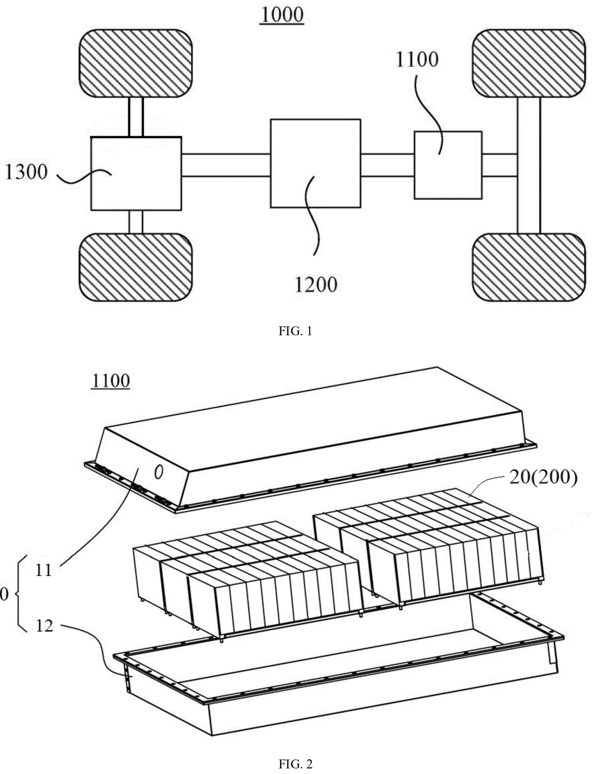

Referring to FIG. 1, FIG. 1 is a schematic structural diagram of a vehicle 1000 according to some embodiments of the present application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 1100 inside, where the battery 1100 may be arranged at the bottom, front, or rear of the vehicle 1000. The battery 1100 may be configured to supply power to the vehicle 1000. For example, the battery 1100 may be used as an operational power source for the vehicle 1000. The vehicle 1000 may further include a controller 1200 and a motor 1300, where the controller 1200 is configured to control the battery 1100 to supply power to the motor 1300, for example, to satisfy power needs of start, navigation, and driving of the vehicle 1000.

In some embodiments of the present application, the battery 1100 may be used as not only the operational power source for the vehicle 1000 but also a driving power source for the vehicle 1000, replacing or partially replacing fossil fuel or natural gas to provide driving traction for the vehicle 1000.

Referring to FIG. 2, as an embodiment of the battery 1100, the battery 1100 includes a box 10 and a battery unit, where the battery unit is accommodated in the box 10 of the battery. The box 10 of the battery is configured to provide an accommodating space for the battery unit. The box 10 of the battery may be a variety of structures. In some embodiments, the box 10 of the battery may include a first portion 11 and a second portion 12. The first portion 11 and the second portion 12 are engaged with each other so that the first portion 11 and the second portion 12 jointly define an accommodating space for accommodating the battery unit. The second portion 12 may be a hollow structure with an opening at one end, the first portion 11 may be a plate structure, and the first portion 11 is engaged with the opening side of the second portion 12, so that the first portion 11 and the second portion 12 jointly define the accommodating space; or the first portion 11 and the second portion 12 may both be hollow structures with an opening on one side, and the opening side of the first portion 11 is engaged with the opening side of the second portion 12. Certainly, the box 10 of the battery formed by the first portion 11 and the second portion 12 may be in various shapes, for example, cylinder or cuboid.

In the battery 1100, the battery unit may be provided in plurality, and the plurality of battery units may be connected in series, parallel, or series-parallel, where being connected in series-parallel means a combination of series and parallel connections of the plurality of battery units. Specifically, the battery unit may be a battery cell 20 or a battery module, where the battery module refers to a modular component formed by assembling a plurality of battery cells 20.

In an embodiment, the plurality of battery cells 20 may be directly connected in series, parallel, or series-parallel, and then an entirety of the plurality of battery cells 20 is accommodated in the box 10. Certainly, the battery 1100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 1100 may further include other structures. For example, the battery 1100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or in other shapes.

As another embodiment of the battery 1100, the battery 1100 may not include the box 10. Instead, a plurality of battery cells 20 are electrically connected and formed into an integral whole through necessary fixing structures before being assembled into an electric device.

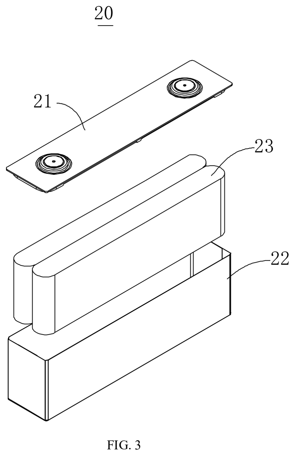

Referring to FIG. 3, FIG. 3 is a schematic structural exploded view of a battery cell 20 according to some embodiments of the present application. The battery cell 20 refers to a smallest element constituting the battery. As shown in FIG. 3, the battery cell 20 includes an end cover 21, a housing 22, an electrode assembly 23, and other functional components.

The end cover 21 refers to a component that covers an opening of the housing 22 to isolate internal environment of the battery cell 20 from external environment. Without limitation, a shape of the end cover 21 may fit with that of the housing 22, such that the end cover can match the housing 22. Optionally, the end cover 21 may be made of a material with certain hardness and strength (for example, aluminum alloy), so that the end cover 21 is less likely to deform when subjected to squeezing or collision, allowing the battery cell 20 to have higher structural strength and enhanced safety performance. The end cover 21 may be provided with functional components such as an electrode terminal. The electrode terminal may be configured to be electrically connected to the electrode assembly 23 for outputting or inputting electrical energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials, such as copper, iron, aluminum, stainless steel, aluminum alloy, and plastic, which are not particularly limited in the embodiments of the present application. In some embodiments, an insulator may also be provided on an inner side of the end cover 21. The insulator may be configured to separate an electrically connected component in the housing 22 from the end cover 21 so as to reduce the risk of short circuit. For example, the insulator may be made of plastic, rubber, or the like.

The housing 22 is an assembly configured to form an internal environment of the battery cell 20 together with the end cover 21, where the formed internal environment may be configured to accommodate the electrode assembly 23, an electrolyte, and other components. The housing 22 and the end cover 21 may be independent components, and an opening may be provided in the housing 22 such that the end cover 21 covers the opening to form the internal environment of the battery cell 20. Without limitation, the end cover 21 and the housing 22 may also be integrated. Specifically, the end cover 21 and the housing 22 may form a shared connection surface before other components are placed inside the housing, and then the end cover 21 covers the housing 22 when the inside of the housing 22 needs to be sealed. The housing 22 may be of various shapes and sizes, such as a rectangular shape, a cylindrical shape, and a hexagonal prism shape. Specifically, the shape of the housing 22 may be determined based on a specific shape and size of the electrode assembly 23. The housing 22 may be made of various materials, such as copper, iron, aluminum, stainless steel, aluminum alloy, and plastic. This is not particularly limited in some embodiments of the present application.

The electrode assembly 23 is a component in the battery cell 20 in which electrochemical reactions take place. The housing 22 may include one or more electrode assemblies 23. The electrode assembly 23 is mainly formed by winding or stacking a positive electrode plate and a negative electrode plate. Portions of the positive electrode plate and the negative electrode plate that have active substances constitute a body portion of the electrode assembly 23, while portions of the positive electrode plate and the negative electrode plate that have no active substance separately constitute a tab. A positive electrode tab and a negative electrode tab may both be located at one end of the body portion or be located at two ends of the body portion respectively. During charge and discharge of the battery, a positive electrode active substance and a negative electrode active substance react with an electrolyte, and the tabs are connected to the electrode terminals to form a current loop.

In the present application, for ease of description, axis Z in the drawings represents the up-down direction, the positive direction of the axis Z represents up, and the negative direction of the axis Z represents down; axis Y in the drawings represents the front-rear direction, the positive direction of the axis Y represents rear, and the negative direction of the axis Y represents front; and the axis X in the drawings represents the left-right direction, the positive direction of the axis X represents right, and the negative direction of the axis X represents left.

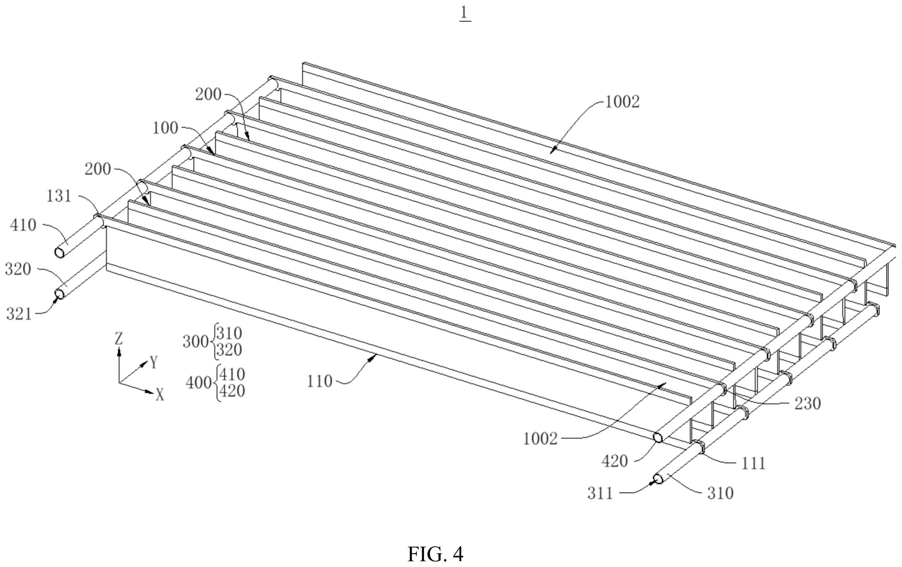

Referring to FIG. 4, FIG. 5, and FIG. 8, in an embodiment of the present application, a heat exchange assembly 1 is provided. The heat exchange assembly 1 includes an inflow pipe assembly 300, an outflow pipe assembly 400, at least one first heat exchange member 100, and at least one second heat exchange member 200. The first heat exchange member 100 is configured with a first heat exchange space 1001, a first inflow end 111, and a first outflow end 131, the first heat exchange space 1001 being for a heat exchange medium to flow, and the first inflow end 111 and the first outflow end 131 both being in communication with the first heat exchange space 1001. The second heat exchange member 200 is configured with a second heat exchange space 210, a second inflow end 220, and a second outflow end 230, the second heat exchange space 210 being for the heat exchange medium to flow, and the second inflow end 220 and the second outflow end 230 both being in communication with the second heat exchange space 210. The first heat exchange member 100 and the second heat exchange member 200 are arranged alternately, and an accommodation space 1002 is configured between an adjacent first heat exchange member 100 and second heat exchange member 200. The first inflow end 111 and the second outflow end 230 are located on the same side of the first heat exchange member 100, and the second inflow end 220 and the first outflow end 131 are located on the same other side of the first heat exchange member 100. The first inflow end 111 and the second inflow end 220 are both in communication with the inflow pipe assembly 300. The first outflow end 131 and the second outflow end 230 are both in communication with the outflow pipe assembly 400.

The first heat exchange member 100 refers to a component made of a thermally conductive material, the thermally conductive material being capable of transferring heat, allowing the heat exchange medium in the first heat exchange space 1001 to exchange heat with battery units through the thermally conductive material.

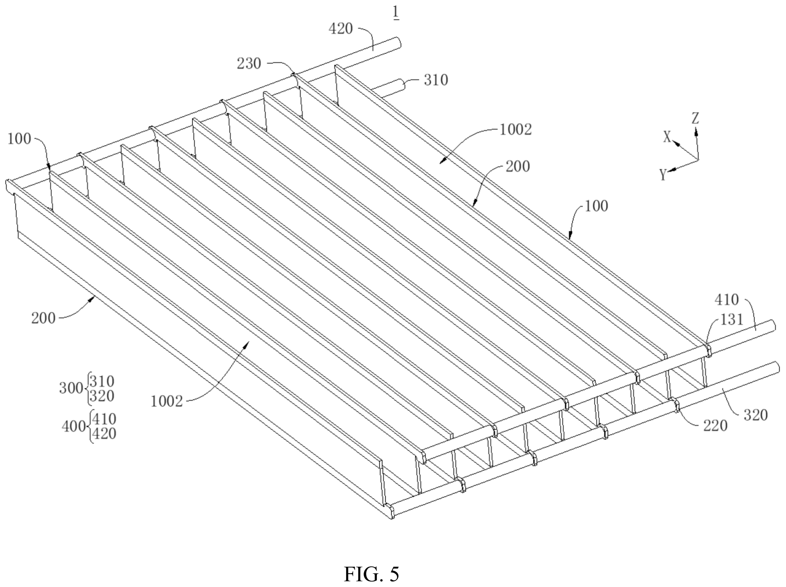

At least one first heat exchange member 100 means that one heat exchange assembly 1 may include one or more first heat exchange members 100. For example, as shown in FIG. 4 and FIG. 5, the heat exchange assembly 1 includes five first heat exchange members 100, the five first heat exchange members 100 being arranged at intervals along a thickness direction of the first heat exchange member 100. However, the number of first heat exchange members 100 is not limited thereto, and may be one, two, three, four, six, or more.

The second heat exchange member 200 refers to a component made of a thermally conductive material, the thermally conductive material being capable of transferring heat, allowing the heat exchange medium in the second heat exchange space 210 to exchange heat with battery units through the thermally conductive material.

At least one second heat exchange member 200 means that one heat exchange assembly 1 may include one or more second heat exchange members 200. For example, as shown in FIG. 4 and FIG. 5, the heat exchange assembly 1 includes five second heat exchange members 200, the five second heat exchange members 200 being arranged at intervals along a thickness direction of the second heat exchange member 200. However, the number of second heat exchange members 200 is not limited thereto, and may be one, two, three, four, six, or more.

The thickness direction, as shown in FIG. 4 and FIG. 5, is direction Y. The following description will also refer to a length direction and a height direction, where, as shown in FIG. 4 and FIG. 5, the height direction is direction Z, and the length direction is direction X.

The first heat exchange member 100 and the second heat exchange member 200 being arranged alternately means that one second heat exchange member 200 is disposed between two adjacent first heat exchange members 100, and one first heat exchange member 100 is disposed between two adjacent second heat exchange members 200. An accommodation space 1002 is configured between an adjacent first heat exchange member 100 and second heat exchange member 200, meaning that the accommodation space 1002 can accommodate one row of battery units, with opposite sides of the battery units exchanging heat with the first heat exchange member 100 and the second heat exchange member 200, respectively. For example, as shown in FIG. 4 and FIG. 5, the first heat exchange member 100 and the second heat exchange member 200 are alternately arranged at intervals along the thickness direction, and a gap between an adjacent first heat exchange member 100 and second heat exchange member 200 constitutes the accommodation space 1002. The first heat exchange member 100 and the second heat exchange member 200 may be parallel or non-parallel, and their specific arrangement may be designed based on the shape of the battery, which is not limited herein.

One row of battery units may include one or more battery units. When one row of battery units includes one battery unit, different positions of the battery unit have different heat exchange effects, resulting in temperature differences between different positions of the battery unit. The heat exchange assembly 1 can reduce the temperature difference between different positions of the battery unit. When one row of battery units includes a plurality of battery units, the plurality of battery units are arranged along the length direction of the first heat exchange member 100, but the heat exchange effects of individual battery units differ, causing significant temperature differences between the battery units. The heat exchange assembly 1 can reduce the temperature difference between the battery units. For ease of description, the embodiments of the present application use an example where one row of battery units includes a plurality of battery units, and specifically, one row of battery units may include two, three, or more battery units.

The first heat exchange space 1001 is a cavity space configured within the first heat exchange member 100 for the heat exchange medium to flow. As the heat exchange medium flows in the first heat exchange space 1001, it exchanges heat with battery units through the first heat exchange member 100, thereby achieving heat exchange for the battery units.

The first inflow end 111 is one of two oppositely disposed ends of the first heat exchange member 100. For example, as shown in FIG. 4, it is one of the two ends distributed along the length direction of the first heat exchange member 100, to be specific, the first inflow end 111 is the right end of the first heat exchange member 100.

The first outflow end 131 is the other of the two oppositely disposed ends of the first heat exchange member 100. For example, as shown in FIG. 4, it is the other of the two ends distributed along the length direction of the first heat exchange member 100, to be specific, the first inflow end 111 is the left end of the first heat exchange member 100.

The first inflow end 111 and the first outflow end 131 are both in communication with the first heat exchange space 1001, meaning that the heat exchange medium flows into the first heat exchange space 1001 from the first inflow end 111, passes through the first heat exchange space 1001 to exchange heat with battery units, and then flows out of the first heat exchange member 100 through the first outflow end 131. For example, as shown in FIG. 4, the heat exchange medium flows in from the right end of the first heat exchange member 100 and flows out from the left end of the first heat exchange member 100.

The second heat exchange space 210 is a cavity space configured within the second heat exchange member 200 for the heat exchange medium to flow. As the heat exchange medium flows in the second heat exchange space 210, it exchanges heat with battery units through the second heat exchange member 200, achieving heat exchange for the battery units.

The second inflow end 220 is one of two oppositely disposed ends of the second heat exchange member 200. For example, as shown in FIG. 4, it is one of the two ends distributed along the length direction of the second heat exchange member 200, to be specific, the second inflow end 220 is the left end of the second heat exchange member 200.

The second outflow end 230 is the other of the two oppositely disposed ends of the second heat exchange member 200. For example, as shown in FIG. 4, it is the other of the two ends distributed along the length direction of the second heat exchange member 200, to be specific, the second outflow end 230 is the right end of the second heat exchange member 200.

The second inflow end 220 and the second outflow end 230 are both in communication with the second heat exchange space 210, meaning that the heat exchange medium flows into the second heat exchange space 210 from the second inflow end 220, passes through the second heat exchange space 210 to exchange heat with battery units, and then flows out of the second heat exchange member 200 through the second outflow end 230. For example, as shown in FIG. 4 and FIG. 5, the heat exchange medium flows in from the left end of the second heat exchange member 200 and flows out from the right end of the second heat exchange member 200.

The first inflow end 111 and the second outflow end 230 being located on the same side of the first heat exchange member 100, and the second inflow end 220 and the first outflow end 131 being located on the same other side of the first heat exchange member 100, mean, for example, as shown in FIG. 4 and FIG. 5, that the first inflow end 111 and the second outflow end 230 are located on the right side of the first heat exchange member 100, and the second inflow end 220 and the first outflow end 131 are located on the left side of the first heat exchange member 100.

The inflow pipe assembly 300 is a pipe assembly through which the heat exchange medium flows before entering the first inflow end 111 and the second inflow end 220.

The outflow pipe assembly 400 is a pipe assembly through which the heat exchange medium flows after exiting the first outflow end 131 and the second outflow end 230.

The first inflow end 111 and the second inflow end 220 being both in communication with the inflow pipe assembly 300, and the first outflow end 131 and the second outflow end 230 being both in communication with the outflow pipe assembly 400, mean that a portion of the heat exchange medium flowing out of the inflow pipe assembly 300 flows into the first inflow end 111, next enters the first heat exchange space 1001 to exchange heat with one side of the battery units, then flows into the outflow pipe assembly 400 via the first outflow end 131, and finally flows out through the outflow pipe assembly 400. Another portion may flow into the second inflow end 220, next enter the second heat exchange space 210 to exchange heat with the other side of the battery units, then flow into the outflow pipe assembly 400 via the second outflow end 230, and finally flow out through the outflow pipe assembly 400. The heat exchange medium may be water, air, coolant, or other media with good thermal conductivity and fluidity.

During operation of the heat exchange assembly 1 of the embodiments of the present application, a row of battery units is located between an adjacent first heat exchange member 100 and second heat exchange member 200. A portion of the heat exchange medium flowing out of the inflow pipe assembly 300 flows into the first inflow end 111, then flows into the first heat exchange space 1001 to exchange heat with one side of the battery units, and finally flows out through the first outflow end 131 and the outflow pipe assembly 400. Simultaneously, another portion of the heat exchange medium flows into the second inflow end 220, then flows into the second heat exchange space 210 to exchange heat with the other side of the battery units, and finally flows out through the second outflow end 230 and the second outflow pipe 420, thus completing the heat exchange for the row of battery units. During this process, the heat exchange medium in the first heat exchange member 100 flows from the first inflow end 111 to the first outflow end 131, while the heat exchange medium in the second heat exchange member 200 flows from the second inflow end 220 to the second outflow end 230. Since the first inflow end 111 and the second outflow end 230 are located on the same side of the first heat exchange member 100, and the second inflow end 220 and the first outflow end 131 are located on the same other side of the first heat exchange member 100, a flow direction of the heat exchange medium in the first heat exchange member 100 is opposite to a flow direction of the heat exchange medium in the second heat exchange member 200. The heat exchange effect on one side of the row of battery units decreases in a direction from the first inflow end 111 toward the first outflow end 131, while the heat exchange effect on the other side increases in a direction from the first inflow end 111 toward the first outflow end 131, resulting in a uniform overall heat exchange effect for the row of battery units, thereby reducing the temperature difference between battery units in the same row of battery units and improving the performance of the battery.

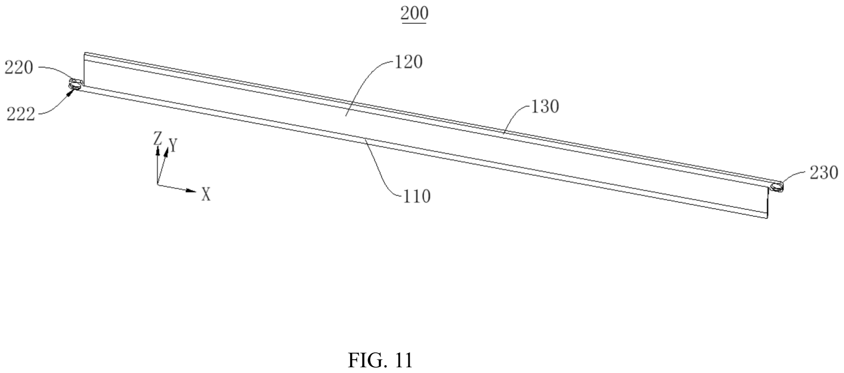

In another embodiment of the present application, referring to FIG. 4, FIG. 5, FIG. 6, and FIG. 11, the first outflow end 131 of the heat exchange assembly 1 is higher than the first inflow end 111; and/or the second outflow end 230 is higher than the second inflow end 220.

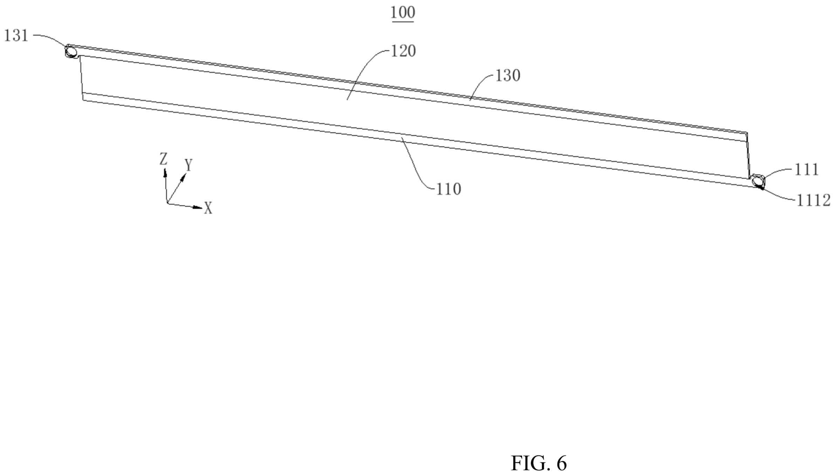

In one possible design, referring to FIG. 6, the first outflow end 131 being higher than the first inflow end 111 means that the first outflow end 131 is located above the first inflow end 111. This design facilitates the upward discharge of gas within a liquid heat exchange medium when flowing in the first heat exchange member 100, thereby contributing to improving the heat exchange efficiency of the first heat exchange member 100.

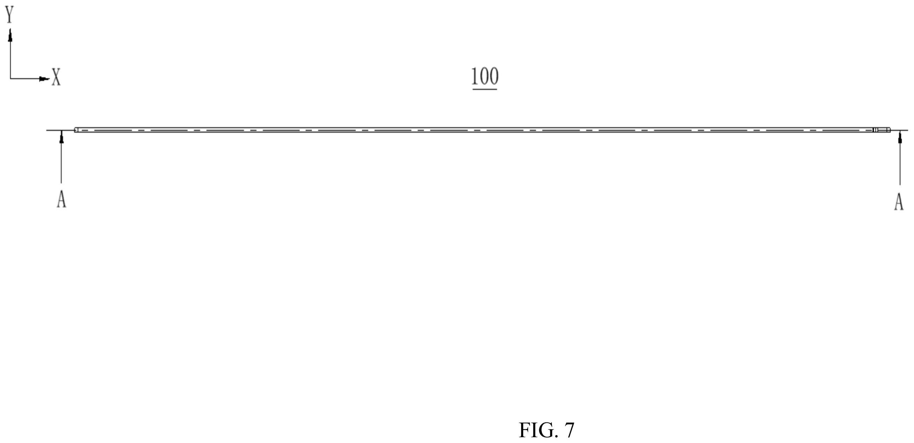

In another possible design, referring to FIG. 7, the second outflow end 230 being higher than the second inflow end 220 means that the second outflow end 230 is located above the second inflow end 220. This design facilitates the upward discharge of gas within a liquid heat exchange medium when flowing in the second heat exchange member 200, thereby contributing to improving the heat exchange efficiency of the second heat exchange member 200.

In yet another possible design, referring to FIG. 4 and FIG. 5, the first outflow end 131 is higher than the first inflow end 111, and the second outflow end 230 is higher than the second inflow end 220. This design facilitates the discharge of gas within the liquid heat exchange medium in both the first heat exchange member 100 and the second heat exchange member 200, thereby contributing to improving the heat exchange efficiency of the first heat exchange member 100 and the second heat exchange member 200.

In another embodiment of the present application, referring to FIG. 6, FIG. 8, FIG. 11, and FIG. 13, the first heat exchange member 100 and the second heat exchange member 200 of the heat exchange assembly 1 are rotationally symmetric.

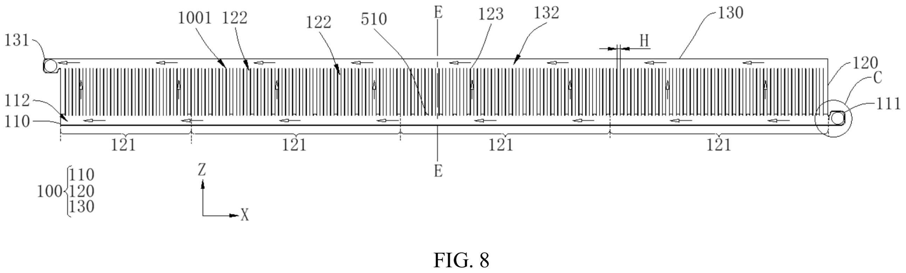

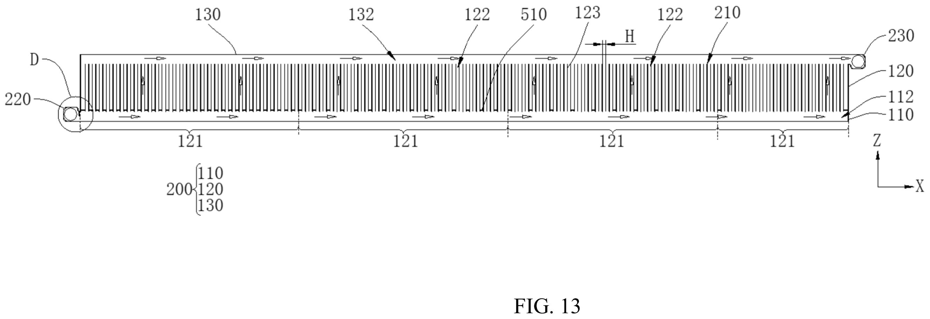

The first heat exchange member 100 and the second heat exchange member 200 being rotationally symmetric means that the structure of the first heat exchange member 100 is identical to that of the second heat exchange member 200, and the first heat exchange member 100, when rotated around a line, can form the second heat exchange member 200. For example, as shown in FIG. 8 and FIG. 13, rotating the first heat exchange member 100 by 180° around a center line E-E results in a heat exchange member identical to the second heat exchange member 200, where the center line E-E is a line equidistant from the first inflow end 111 and the first outflow end 131, meaning a spacing between the center line E-E and the first inflow end 111 equals a spacing between the center line E-E and the first outflow end 131.

In the heat exchange assembly 1 of the embodiments of the present application, for the structure of the first heat exchange member 100 is the same as the structure of the second heat exchange member 200, which increases component versatility and reduces manufacturing difficulty and cost. Additionally, since the heat exchange medium flows in the same manner within both the first heat exchange member 100 and the second heat exchange member 200, opposite sides of a row of battery units are subjected to identical and symmetrical heat exchange effects. This results in identical heat exchange effects for battery units on the left and right sides of the same row of battery units, with individual battery units experiencing similar or identical overall heat exchange effects, improving the temperature difference reduction effect for the same row of battery units and contributing to improving the performance of the battery. Furthermore, the flow distribution of the heat exchange medium in the first heat exchange member 100 is completely symmetrical to that in the second heat exchange member 200, so for a row of battery units between an adjacent first heat exchange member 100 and second heat exchange member 200, the total flow rates of the heat exchange medium on opposite sides of individual battery units are similar, resulting in substantially consistent heat exchange effects for the individual battery units in the same row, effectively reducing the temperature difference between battery units in the same row.

As shown in FIG. 8 and FIG. 13, the heat exchange medium in the first heat exchange member 100 flows from right to left, while the heat exchange medium in the second heat exchange member 200 flows from left to right, resulting in opposite flow directions of the heat exchange medium on opposite sides of the same row of battery units, thereby reducing the temperature difference between battery units.

The following description uses the first heat exchange member 100 as an example.

In another embodiment of the present application, referring to FIG. 7 and FIG. 8, the first heat exchange member 100 includes a first manifold 110, a heat exchange body 120, and a second manifold 130, the heat exchange body 120 being connected between the first manifold 110 and the second manifold 130, the heat exchange body 120 being configured with the first heat exchange space 1001, the first manifold 110 being configured with an inflow channel 112 and the first inflow end 111, the second manifold 130 being configured with an outflow channel 132 and the first outflow end 131, the inflow channel 112 communicating the first inflow end 111 with the first heat exchange space 1001, and the outflow channel 132 communicating the first outflow end 131 with the first heat exchange space 1001.

The first manifold 110, for example, as shown in FIG. 4 and FIG. 6, refers to a component connecting the first heat exchange member 100 and the inflow pipe assembly 300.

The inflow channel 112 is a channel provided within the first manifold 110.

The second manifold 130, for example, as shown in FIG. 4 and FIG. 6, refers to a component connecting the first heat exchange member 100 and the outflow pipe assembly 400.

The outflow channel 132 is a channel provided within the second manifold 130.

The heat exchange body 120 refers to a component located between the first manifold 110 and the second manifold 130. The first manifold 110 and the second manifold 130 are respectively located on opposite sides of the first heat exchange member 100.

The inflow channel 112 communicating the first inflow end 111 with the first heat exchange space 1001, and the outflow channel 132 communicating the first outflow end 131 with the first heat exchange space 1001, mean that the heat exchange medium flowing out of the first inflow end 111 flows into the inflow channel 112, next flows into the first heat exchange space 1001 for heat exchange, then flows into the outflow channel 132, and finally flows out through the first outflow end 131, achieving the flow of the heat exchange medium in the first heat exchange member 100.

In the heat exchange assembly 1 of this embodiment of the present application, the first heat exchange member 100 employs a structural form including the first manifold 110, the heat exchange body 120, and the second manifold 130, which features simple structure and facilitates processing and manufacturing.

In another embodiment of the present application, referring to FIG. 6 and FIG. 8, the first heat exchange space 1001 of the heat exchange assembly 1 is configured with a plurality of heat exchange channels 122 for communicating the inflow channel 112 and the outflow channel 132, where the inflow channel 112, the heat exchange channels 122, and the outflow channel 132 are arranged along a height direction of the first heat exchange member 100, the inflow channel 112 extends from the first inflow end 111 along a length direction of the first heat exchange member 100 toward the first outflow end 131, the outflow channel 132 extends from the first outflow end 131 along the length direction of the first heat exchange member 100 toward the first inflow end 111, and the plurality of heat exchange channels 122 are arranged at intervals along the length direction of the first heat exchange member 100.

The heat exchange channels 122 are channels formed within the heat exchange body 120. For example, as shown in FIG. 8, the first heat exchange space 1001 is provided with a plurality of partitions 123 arranged at intervals, and a heat exchange channel 122 is a channel formed between two adjacent partitions 123.

The heat exchange channels 122 communicating the inflow channel 112 and the outflow channel 132 mean that after the heat exchange medium flowing out of the first inflow end 111 flows into the inflow channel 112, it splits into a plurality of streams. These streams of heat exchange medium respectively flow into the heat exchange channels 122 in a one-to-one correspondence, then flow through the individual heat exchange channels 122 to converge in the outflow channel 132, and finally flows out from the first outflow end 131, achieving the flow of the heat exchange medium in the first heat exchange member 100. The provision of the plurality of heat exchange channels 122 splits the heat exchange medium into the plurality of streams, increasing the heat exchange area between the heat exchange medium and the first heat exchange member 100, which contributes to improving the heat exchange effect for the battery units.

The inflow channel 112, the heat exchange channels 122, and the outflow channel 132 being arranged along the height direction of the first heat exchange member 100 means that the inflow channel 112, the heat exchange channels 122, and the outflow channel 132 are arranged sequentially from bottom to top or from top to bottom. Of course, in other embodiments, the inflow channel 112, the heat exchange channels 122, and the outflow channel 132 may also be arranged sequentially from left to right or from right to left.

The inflow channel 112 extending from the first inflow end 111 along the length direction of the first heat exchange member 100 toward the first outflow end 131 means, for example, as shown in FIG. 8, that the inflow channel 112 extends from left to right until it communicates with the first inflow end 111 located on the left side.

The outflow channel 132 extending from the first outflow end 131 along the length direction of the first heat exchange member 100 toward the first inflow end 111 means, for example, as shown in FIG. 8, that the outflow channel 132 extends from right to left until it communicates with the first outflow end 131 located on the right side.

The plurality of heat exchange channels 122 being arranged at intervals along the length direction of the first heat exchange member 100 means, for example, as shown in FIG. 8, that the heat exchange channels 122 are arranged at intervals from left to right or from right to left, with two ends of the heat exchange channels 122 communicating with the inflow channel 112 and the outflow channel 132, respectively.

During operation of the heat exchange assembly 1 of this embodiment of the present application, the heat exchange medium flowing out of the first inflow end 111 flows into the inflow channel 112, flows along the length direction of the first heat exchange member 100 within the inflow channel 112, and during this flow, the heat exchange medium gradually enters the individual heat exchange channels 122. As it flows through the individual heat exchange channels 122, it exchanges heat with the battery units, then flows into the outflow channel 132 to converge, and finally flows out from the first outflow end 131, thus achieving the flow of the heat exchange medium in the first heat exchange member 100. During this flow process, the heat exchange medium can flow along the entire length direction of the first heat exchange member 100, enabling heat exchange with all battery units in the same row of battery units. Additionally, in specific applications, the heat exchange medium in the inflow channel 112 may not exchange heat with the battery units or may exchange only a small amount of heat with the battery units, so that the initial temperatures of the heat exchange medium flowing from the inflow channel 112 into the individual heat exchange channels 122 are the same or nearly the same, and the initial temperatures of the heat exchange medium exchanging heat with the individual battery units in the same row of battery units are the same or nearly the same, effectively reducing the temperature difference between battery units in the same row of battery units.

Additionally, it should be noted that, since the structure of the first heat exchange member 100 is identical to that of the second heat exchange member 200, similarly, the temperatures of the heat exchange medium flowing from the inflow channel 112 in the second heat exchange member 200 into the individual heat exchange channels 122 are the same or nearly the same, further effectively reducing the temperature difference between battery units in the same row of battery units.

In another embodiment of the present application, referring to FIG. 7 and FIG. 8, the heat exchange channels 122 of the heat exchange assembly 1 extend along the height direction of the first heat exchange member 100.

The heat exchange channels 122 extending along the height direction of the first heat exchange member 100 means, for example, as shown in FIG. 8, that the heat exchange channels 122 extend vertically, so the first heat exchange member 100 has a regular structure, making the processing and manufacturing of the first heat exchange member 100 simple.

Of course, in other embodiments, the heat exchange channels 122 may alternatively extend at an angle.

In another embodiment of the present application, referring to FIG. 8, the plurality of heat exchange channels 122 of the heat exchange assembly 1 have the same width H.

The width H of the heat exchange channel 122, for example, as shown in FIG. 8, may refer to a spacing between two adjacent partitions 123.

The plurality of heat exchange channels 122 having the same width means that the plurality of partitions 123 are evenly spaced within the heat exchange body 120.

The heat exchange assembly 1 of this embodiment of the present application, the plurality of heat exchange channels 122 have the same width H, so the first heat exchange member 100 has a regular structure, facilitating processing and manufacturing.

Referring to FIG. 8, in the first heat exchange member 100, the heat exchange medium flowing in from the first inflow end 111 flows into the inflow channel 112 and flows from right to left within the inflow channel 112. During the process of the heat exchange medium flowing from right to left in the inflow channel 112, the heat exchange medium splits into a plurality of streams, these streams flow into the individual heat exchange channels 122 in a one-to-one correspondence to exchange heat with the battery units, and then flow out from the outflow channel 132. The flow path of the heat exchange medium in the first heat exchange member 100 can be referred to the path indicated by the hollow arrows in FIG. 8. However, a lower resistance to the heat exchange medium entering the heat exchange channels 122 closer to the first inflow end 111 and a higher resistance to the heat exchange medium entering the heat exchange channels 122 closer to the first outflow end 131 indicate more heat exchange medium flows into the heat exchange channels 122 closer to the first inflow end 111 and less heat exchange medium flows into the heat exchange channels 122 closer to the first outflow end 131, meaning that the flow distribution of the heat exchange medium in the heat exchange channels 122 of the first heat exchange member 100 is higher on the right and lower on the left.

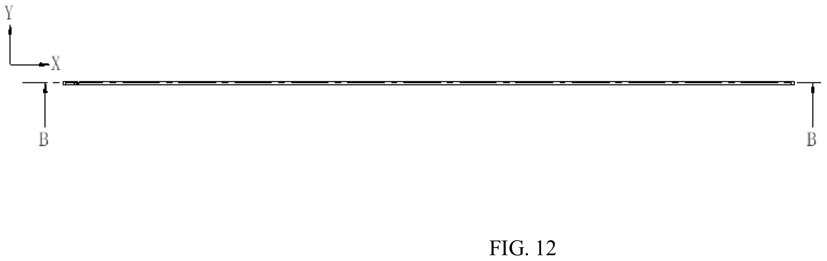

Since the first heat exchange member 100 and the second heat exchange member 200 are rotationally symmetric, the structure of the second heat exchange member 200 is as follows: Referring to FIG. 12 and FIG. 13, in the second heat exchange member 200, the heat exchange medium flowing in from the second inflow end 220 flows into the inflow channel 112 and flows from left to right within the inflow channel 112. During the process of the heat exchange medium flowing from left to right in the inflow channel 112, the heat exchange medium splits into a plurality of streams, these streams flow into the individual heat exchange channels 122 in a one-to-one correspondence to exchange heat with the battery units, and then flow out through the second outflow end 230. The flow path of the heat exchange medium in the second heat exchange member 200 can be referred to the path indicated by the hollow arrows in FIG. 13. However, a lower resistance to the heat exchange medium entering the heat exchange channels 122 closer to the second inflow end 220 and a higher resistance to the heat exchange medium entering the heat exchange channels 122 closer to the second outflow end 230 results in more heat exchange medium flows into the heat exchange channels 122 closer to the second inflow end 220 and less heat exchange medium flows into the heat exchange channels 122 closer to the second outflow end 230, meaning that the flow distribution of the heat exchange medium in the heat exchange channels 122 of the second heat exchange member 200 is higher on the left and lower on the right.

The flow distribution of the heat exchange medium in the first heat exchange member 100 is higher on the right and lower on the left, while the flow distribution in the second heat exchange member 200 is higher on the left and lower on the right. In this way, for one row of battery units between an adjacent first heat exchange member 100 and second heat exchange member 200, the total flow rates of the heat exchange medium on opposite sides of the individual battery units are similar, the initial temperatures of the heat exchange medium flowing into the individual heat exchange channels 122 in the first heat exchange member 100 are the same or nearly the same, and the initial temperatures of the heat exchange medium flowing into the individual heat exchange channels 122 in the second heat exchange member 200 are the same or nearly the same. Thus, the heat exchange effects for the battery units in the same row are substantially consistent, effectively reducing the temperature difference between battery units in the same row.

In another embodiment of the present application, referring to FIG. 8, some of the heat exchange channels 122 of the heat exchange assembly 1 each are provided with a sealing member 510, the sealing member 510 sealing the heat exchange channel 122; the heat exchange body 120 is divided into a plurality of heat exchange segments 121, the heat exchange segments 121 being arranged along the length direction of the first heat exchange member 100; and in the flow direction of the heat exchange medium in the inflow channel 112, the number of sealing members 510 in the heat exchange segments 121 gradually decreases.

The sealing member 510 refers to a component that seals the heat exchange channel 122. When a heat exchange channel 122 is sealed by the sealing member 510, the heat exchange medium cannot flow from that heat exchange channel 122 into the outflow channel 132. Specifically, the sealing member 510 may be, but is not limited to, a plug or a sealing plate disposed transversely within the heat exchange channel 122.

Some of the heat exchange channels 122 means that some heat exchange channels 122 in the first heat exchange member 100 each are provided with the sealing member 510, while other heat exchange channels 122 each are not provided with the sealing member 510, and the heat exchange channels 122 without sealing members 510 can communicate the inflow channel 112 with the outflow channel 132.

The heat exchange body 120 is divided into a plurality of heat exchange segments 121, the heat exchange segments 121 being arranged along the length direction of the first heat exchange member 100. As shown in FIG. 8, the heat exchange segment 121 is a projection region segment of a corresponding battery unit in a corresponding row of battery units projected onto the heat exchange body 120 along direction Y, and the heat exchange segments 121 are arranged in a one-to-one correspondence with the battery units in the corresponding row of battery units. In another embodiment, the heat exchange segment 121 may be one of segments of the heat exchange body 120 that are divided along the length direction of the first heat exchange member 100 according to a preset length, where the specific length may be selected based on actual needs and is not limited herein. The division may be equidistant or may be non-equidistant, which is not limited herein.

The flow direction of the heat exchange medium in the inflow channel 112, for example, as shown in FIG. 8, the direction indicated by the hollow arrows in the inflow channel 112, may also be referred to the negative direction of the X-axis in FIG. 8.

It should be noted herein that more sealing members 510 in a heat exchange segment 121 results in greater resistance to the heat exchange medium flowing from the inflow channel 112 into the heat exchange channels 122 in that heat exchange segment 121. Greater resistance results in more heat exchange medium flowing into subsequent heat exchange channels 122.

The heat exchange assembly 1 of this embodiment of the present application, as the number of sealing members 510 in the heat exchange segments 121 gradually decreases in the flow direction of the heat exchange medium in the inflow channel 112, the resistance to the heat exchange medium flowing into the heat exchange channels 122 on the left side is reduced in the right-to-left flow direction of the heat exchange medium in the inflow channel 112. This reduces the heat exchange medium flowing into the heat exchange channels 122 on the right side, while allowing more heat exchange medium to flow into the heat exchange channels 122 on the left side. As a result, this improves the flow distribution of the heat exchange medium in the heat exchange channels 122 of the first heat exchange member 100, which is higher on the right and lower on the left, enhances the uniformity of the flow distribution of the heat exchange medium in the heat exchange body 120, and reduces the temperature difference between battery units in the same row.

Additionally, as the first heat exchange member 100 and the second heat exchange member 200 are rotationally symmetric, the arrangement of the sealing members 510 in the first heat exchange member 100 is symmetrical to that in the second heat exchange member 200, ensuring that the total flow rates of the heat exchange medium participating in heat exchange on two sides of the individual battery units in the same row are substantially similar, guaranteeing that the heat exchange effects between the individual battery units and the heat exchange medium are substantially consistent, thereby reducing the temperature difference between battery units in the same row.

In another embodiment of the present application, referring to FIG. 8, the sealing members 510 in at least one heat exchange segment 121 of the heat exchange assembly 1 are arranged at uniform intervals.

The sealing members 510 in at least one heat exchange segment 121 being arranged at uniform intervals means that the sealing members 510 in a heat exchange segment 121 are arranged at uniform intervals. In a heat exchange body 120, the sealing members 510 in one heat exchange segment 121 may be arranged at uniform intervals, or the sealing members 510 in a plurality of heat exchange segments 121 may be arranged at uniform intervals. That is, the sealing members 510 in some or all heat exchange segments 121 in the heat exchange body 120 may be arranged at uniform intervals, or the sealing members 510 in all heat exchange segments 121 in the heat exchange body 120 may be arranged at uniform intervals. Additionally, the sealing members 510 being arranged at uniform intervals means that the spacing between two adjacent sealing members 510 are the same.

In the heat exchange assembly 1 of this embodiment of the present application, the sealing members 510 are uniformly distributed, facilitating processing and manufacturing.

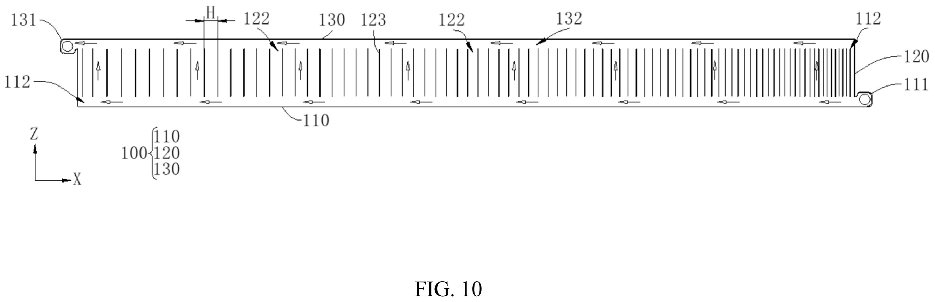

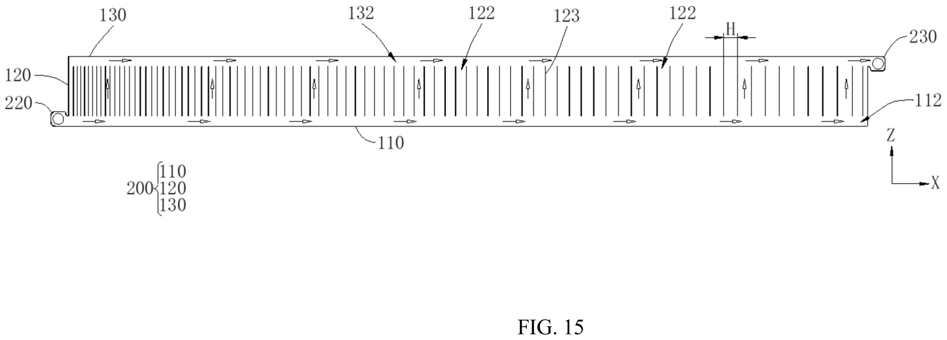

In another embodiment of the present application, referring to FIG. 10 and FIG. 15, in the flow direction of the heat exchange medium in the inflow channel 112 of the heat exchange assembly 1, the width H of the heat exchange channels 122 gradually increases.

In the flow direction of the heat exchange medium in the inflow channel 112, the width H of the heat exchange channels 122 gradually increasing means, for example, as shown in FIG. 10, that in the first heat exchange member 100, the width H of the heat exchange channels 122 increases from right to left. It should be noted that a larger spacing of the heat exchange channels 122 results in a lower resistance to the heat exchange medium flowing into the heat exchange channels 122, making it easier for the heat exchange medium to flow into those channels. Therefore, when the heat exchange medium flows from right to left along the inflow channel 112, the resistance to the heat exchange medium flowing into the heat exchange channels 122 on the left side is reduced, thereby reducing the heat exchange medium flowing into the heat exchange channels 122 on the right side while allowing more heat exchange medium to flow into the heat exchange channels 122 on the left side. This improves the flow distribution of the heat exchange medium in the heat exchange channels 122 of the first heat exchange member 100, which is higher on the right and lower on the left, enhances the uniformity of the flow distribution of the heat exchange medium in the heat exchange body 120, and reduces the temperature difference between battery units in the same row.

Similarly, as shown in FIG. 15, in the second heat exchange member 200, the width H of the heat exchange channels 122 increases from left to right. It should be noted that a larger spacing of the heat exchange channels 122 results in a lower resistance to the heat exchange medium flowing into the heat exchange channels 122, making it easier for the heat exchange medium to flow into those channels. Therefore, when the heat exchange medium flows from left to right along the inflow channel 112, the resistance to the heat exchange medium flowing into the heat exchange channels 122 on the right side is reduced, thereby reducing the heat exchange medium flowing into the heat exchange channels 122 on the left side while allowing more heat exchange medium to flow into the heat exchange channels 122 on the right side. This improves the flow distribution of the heat exchange medium in the heat exchange channels 122 of the second heat exchange member 200, which is higher on the left and lower on the right, enhances the uniformity of the flow distribution of the heat exchange medium in the heat exchange body 120, and reduces the temperature difference between battery units in the same row.

Additionally, since the first heat exchange member 100 and the second heat exchange member 200 are rotationally symmetric, the spacing distribution of the heat exchange channels 122 in the first heat exchange member 100 is symmetrical to that in the second heat exchange member 200, ensuring that the total flow rates of the heat exchange medium participating in heat exchange on two sides of the individual battery units in the same row are substantially similar, guaranteeing that the heat exchange effects between the individual battery units and the heat exchange medium are substantially consistent, thereby reducing the temperature difference between battery units in the same row.

In another embodiment of the present application, referring to FIG. 6 and FIG. 8, the outflow channel 132 of the heat exchange assembly 1 is located above the heat exchange channels 122, and the inflow channel 112 is located below the heat exchange channels 122.

The outflow channel 132 being located above the heat exchange channels 122 and the inflow channel 112 being located below the heat exchange channels 122 mean, as shown in FIG. 8, that the outflow channel 132, the heat exchange channels 122, and the inflow channel 112 are arranged sequentially from top to bottom. This design allows a liquid heat exchange medium to flow from bottom to top, facilitating the discharge of gas within the liquid heat exchange medium and improving the heat exchange efficiency of the first heat exchange member 100.

In another embodiment of the present application, referring to FIG. 10, the first manifold 110 and the heat exchange body 120 of the heat exchange assembly 1 are of a split structure; and/or the second manifold 130 and the heat exchange body 120 are of a split structure.

In one possible design, the first manifold 110 and the heat exchange body 120 are of a split structure.

The first manifold 110 and the heat exchange body 120 being of a split structure means that the first manifold 110 and the heat exchange body 120 are connected by a connection structure, where the connection structure may be a screw structure, a snap structure, an adhesive structure, a magnetic adsorption structure, or any other structure capable of connecting and fixing two components. Additionally, during the manufacturing process of the first heat exchange member 100, the inflow channel 112 and the heat exchange channels 122 are processed on the first manifold 110 and the heat exchange body 120, respectively, and after processing, the first manifold 110 and the heat exchange body 120 are assembled together to form the first heat exchange member 100. Using this split structure, the processing difficulty of the inflow channel 112 and the heat exchange channels 122 is low, making the processing and manufacturing of the first heat exchange member 100 simple and convenient.

In another possible design, the second manifold 130 and the heat exchange body 120 are of a split structure.

The second manifold 130 and the heat exchange body 120 being of a split structure means that the second manifold 130 and the heat exchange body 120 are connected by a connection structure, where the connection structure may be a screw structure, a snap structure, an adhesive structure, a magnetic adsorption structure, or any other structure capable of connecting and fixing two components. Additionally, during the manufacturing process of the first heat exchange member 100, the outflow channel 132 and the heat exchange channels 122 are processed on the second manifold 130 and the heat exchange body 120, respectively, and after processing, the second manifold 130 and the heat exchange body 120 are assembled together to form the first heat exchange member 100. Using this split structure, the processing difficulty of the outflow channel 132 and the heat exchange channels 122 is low, making the processing and manufacturing of the first heat exchange member 100 simple and convenient.

In yet another possible design, the first manifold 110 and the heat exchange body 120 are of a split structure, and the second manifold 130 and the heat exchange body 120 are of a split structure.

In the heat exchange assembly 1 of the embodiment of the present application, during the manufacturing process of the first heat exchange member 100, the inflow channel 112, the heat exchange channels 122, and the outflow channel 132 are processed on the first manifold 110, the heat exchange body 120, and the second manifold 130, respectively. After processing, the first manifold 110, the second manifold 130, and the heat exchange body 120 are assembled together to form the first heat exchange member 100. Using this split structure, the processing difficulty of the inflow channel 112, the outflow channel 132, and the heat exchange channels 122 is low, making the processing and manufacturing of the first heat exchange member 100 simple and convenient.

In another embodiment of the present application, referring to FIG. 10, a portion of an end of the first manifold 110 protruding outside the heat exchange body 120 of the heat exchange assembly 1 forms the first inflow end 111; and/or a portion of an end of the second manifold 130 protruding outside the heat exchange body 120 forms the first outflow end 131.

In one possible design, a portion of an end of the first manifold 110 protruding outside the heat exchange body 120 forming the first inflow end 111 means, for example, as shown in FIG. 4, FIG. 5, and FIG. 6, that a portion of the right end of the first manifold 110 protruding beyond the right side of the heat exchange body 120 is the first inflow end 111. The space above the first inflow end 111 can accommodate the outflow pipe assembly 400, which can reduce the volume of the heat exchange assembly 1 and contributes to increasing the energy density of the battery.

In another possible design, a portion of an end of the second manifold 130 protruding outside the heat exchange body 120 forming the first outflow end 131 means, for example, as shown in FIG. 4, FIG. 5, and FIG. 6, that a portion of the left end of the first manifold 110 protruding beyond the left side of the heat exchange body 120 is the first outflow end 131. The space below the first outflow end 131 can accommodate the inflow pipe assembly 300, which can reduce the volume of the heat exchange assembly 1 and contributes to increasing the energy density of the battery.

In yet another possible design, a portion of an end of the first manifold 110 protruding outside the heat exchange body 120 forms the first inflow end 111, and a portion of an end of the second manifold 130 protruding outside the heat exchange body 120 forms the first outflow end 131. For example, as shown in FIG. 4, FIG. 5, and FIG. 6, a portion of the right end of the first manifold 110 protruding beyond the right side of the heat exchange body 120 is the first inflow end 111, and a portion of the left end of the first manifold 110 protruding beyond the left side of the heat exchange body 120 is the first outflow end 131. The space above the first inflow end 111 can accommodate the outflow pipe assembly 400, and the space below the first outflow end 131 can accommodate the inflow pipe assembly 300, which can further reduce the volume of the heat exchange assembly 1 and contributes to increasing the energy density of the battery.

It should be noted that the above embodiments are described specifically using the structure of the first heat exchange member 100 as an example. In other embodiments, it can be understood that by designing the first heat exchange member 100 and the second heat exchange member 200 to have identical structures, rotating the first heat exchange member 100 by 180° around E-E results in a heat exchange member identical to the structure the second heat exchange member 200, ensuring identical heat exchange effects on the left and right sides of battery units in the same row. This is not repeated herein. Of course, in other embodiments, the first heat exchange member 100 and the second heat exchange member 200 may adopt different structures, with specific structures set according to actual needs, which is not limited herein.

In another embodiment of the present application, referring to FIG. 4 and FIG. 5, the inflow pipe assembly 300 of the heat exchange assembly 1 includes a first inflow pipe 310 and a second inflow pipe 320, the first inflow pipe 310 being in communication with the first inflow end 111, and the second inflow pipe 320 being in communication with the second inflow end 220.

The first inflow pipe 310 is a pipe through which the heat exchange medium flows before entering the first inflow end 111.

The second inflow pipe 320 is a pipe through which the heat exchange medium flows before entering the second inflow end 220.

In the heat exchange assembly 1 of this embodiment of the present application, the first inflow end 111 and the second inflow end 220 are located on opposite sides of the heat exchange assembly 1, the heat exchange medium flowing out from the first inflow pipe 310 flows into each of the first inflow ends 111, and the heat exchange medium flowing out form the second inflow pipe 320 flows in to each of the second inflow ends 220, with separate flow supply to the first heat exchange member 100 and the second heat exchange member 200, facilitating the pipe distribution of the inflow pipe assembly 300.

In another embodiment of the present application, referring to FIG. 4 and FIG. 5, in the heat exchange assembly 1, the first heat exchange member 100 is provided in plurality and the second heat exchange member 200 is provided in plurality, and an alternating arrangement direction of the first heat exchange members 100 and the second heat exchange members 200 is a first direction (refer to direction Y); the first inflow pipe 310 extends along the first direction and is sequentially in communication with each of the first inflow ends 111, and the second inflow pipe 320 extends along the first direction and is sequentially in communication with each of the second inflow ends 220.

The first heat exchange member 100 being provided in plurality means that in a heat exchange assembly 1, the number of first heat exchange members 100 is two, three, or more, for example, as shown in FIG. 4 and FIG. 5, the number of first heat exchange members 100 is five.

The second heat exchange member 200 being provided in plurality means that in a heat exchange assembly 1, the number of second heat exchange members 200 is two, three, or more, for example, as shown in FIG. 4 and FIG. 5, the number of second heat exchange members 200 is five.

The first direction, for example, as shown in FIG. 4 and FIG. 5, may refer to direction Y, meaning that the first heat exchange members 100 and the second heat exchange members 200 are alternately arranged at intervals along direction Y.

The first inflow pipe 310 extending along the first direction and being sequentially in communication with each of the first inflow ends 111 means that the heat exchange medium flows into the first inflow pipe 310 and then sequentially flows into each of the first inflow ends 111 along the first direction. As shown in FIG. 4 and FIG. 5, the first inflow pipe 310 is sequentially in communication with each of the first inflow ends 111 from front to rear.

The second inflow pipe 320 extending along the first direction and being sequentially in communication with each of the second inflow ends 220 means that the heat exchange medium flows into the second inflow pipe 320 and then sequentially flows into each second inflow end 220 along the first direction. As shown in FIG. 4 and FIG. 5, the second inflow pipe 320 is sequentially in communication with each of the second inflow ends 220 from front to rear.

In the heat exchange assembly 1 of this embodiment of the present application, the first inflow pipe 310 extends along the first direction and is sequentially in communication with each of the first inflow ends 111, with a simple layout for the first inflow pipe 310. Similarly, the second inflow pipe 320 extends along the first direction and is sequentially in communication with each of the second inflow ends 220, with a simple layout for the second inflow pipe 320, making the processing and manufacturing of the heat exchange assembly 1 straightforward.

In another embodiment of the present application, referring to FIG. 4 and FIG. 5, the first inflow pipe 310 of the heat exchange assembly 1 is configured with a first inflow port 311, the first inflow end 111 is configured with a first inflow space 1111, the first inflow space 1111 communicates the first inflow pipe 310 with the first heat exchange space 1001, and a first baffle plate 520 is provided in the first inflow space 1111 close to the first inflow port 311 to increase a resistance to the heat exchange medium flowing into the first heat exchange space 1001; and/or the second inflow pipe 320 is configured with a second inflow port 321, the second inflow end 220 is configured with a second inflow space 221, the second inflow space 221 communicates the second inflow pipe 320 with the second heat exchange space 210, and a second baffle plate 530 is provided in the second inflow space 221 close to the second inflow port 321 to increase a resistance to the heat exchange medium flowing into the second heat exchange space 210.

In one possible design, the first inflow pipe 310 is configured with a first inflow port 311, the first inflow end 111 is configured with a first inflow space 1111, the first inflow space 1111 communicates the first inflow pipe 310 with the first heat exchange space 1001, and a first baffle plate 520 is provided in the first inflow space 1111 close to the first inflow port 311 to increase the resistance to the heat exchange medium flowing into the first heat exchange space 1001.

The first inflow port 311 means that the heat exchange medium can flow into the first inflow pipe 310 through the first inflow port 311. For example, as shown in FIG. 4, the first inflow port 311 is an opening on the front end face of the first inflow pipe 310. After the heat exchange medium flows into the first inflow pipe 310 through the first inflow port 311, it flows rearward along the first inflow pipe 310 and into each of the first inflow ends 111.

The first inflow space 1111 is a cavity space formed within the first inflow end 111.

The first inflow space 1111 communicating the first inflow pipe 310 with the first heat exchange space 1001 means that the heat exchange medium flowing in the first inflow pipe 310 can flow into the first inflow space 1111 and then into the first heat exchange space 1001 through the first inflow space 1111, achieving heat exchange with the battery units.

A first baffle plate 520 being provided in the first inflow space 1111 close to the first inflow port 311 means, for example, as shown in FIG. 4, that the first heat exchange members 100 are arranged from front to rear, and the first inflow ends 111 are also arranged from front to rear. The second inflow space 221 close to the first inflow port 311 may be the first inflow space 1111 of one or more first inflow ends 111 located at the front. For example, if the number of first heat exchange members 100 is five, the first inflow spaces 1111 of the first three first inflow ends 111 each are provided with the first baffle plate 520, while the first inflow spaces 1111 of the last two first inflow ends 111 each are not provided with the first baffle plate 520. Alternatively, the first inflow space 1111 of the first one, the first two, or the first four first inflow ends 111 each may be provided with the first baffle plate 520, with the remaining first inflow spaces 1111 of the first inflow ends 111 not provided with the first baffle plate 520. Still alternatively, any one or two of the first inflow spaces 1111 of the first three first inflow ends 111 each are provided with the first baffle plate 520, with the remaining the first inflow spaces 1111 of the first inflow ends 111 not provided with the first baffle plate 520. Of course, in other embodiments, the number of first heat exchange members 100 may be two, three, four, or six or more, and the arrangement of the first baffle plates 520 may be selected based on actual needs, which is not limited herein.

The first baffle plate 520 being configured to increase the resistance to the heat exchange medium flowing into the first heat exchange space 1001 means that the first baffle plate 520 can reduce the flow area of the heat exchange medium passing through the first inflow space 1111, thereby increasing the resistance to the heat exchange medium flowing through the first inflow space 1111, and reducing the heat exchange medium flowing into the first heat exchange space 1001.

It should be noted that during the process of the heat exchange medium flowing from front to rear along the first inflow pipe 310, the resistance to the heat exchange medium flowing into the first heat exchange space 1001 on the front side is low, while the resistance to the heat exchange medium flowing into the first heat exchange space 1001 on the rear side is high, resulting in a flow distribution of the heat exchange medium in the first heat exchange members 100 that is higher at the front and lower at the rear. This causes differences in the flow rates of the heat exchange medium participating in heat exchange between different rows of battery units, leading to significant temperature differences between different rows of battery units.

In the heat exchange assembly 1 of this embodiment of the present application, by providing the first baffle plate 520 in the first inflow space 1111 close to the first inflow port 311, the resistance to the heat exchange medium flowing into the first heat exchange space 1001 on the front side increases, allowing more heat exchange medium to flow into the first heat exchange space 1001 on the rear side, thereby improving the uneven front-rear distribution of the heat exchange medium, enhancing the uniformity of the front-rear distribution of the heat exchange medium, and reducing the temperature difference between different rows of battery units.

In another possible design, the second inflow pipe 320 is configured with a second inflow port 321, the second inflow end 220 is configured with a second inflow space 221, the second inflow space 221 communicates the second inflow pipe 320 with the second heat exchange space 210, and a second baffle plate 530 is provided in the second inflow space 221 close to the second inflow port 321 to increase the resistance to the heat exchange medium flowing into the second heat exchange space 210.

The second inflow port 321 means that the heat exchange medium can flow into the second inflow pipe 320 through the second inflow port 321. For example, as shown in FIG. 4, the second inflow port 321 is an opening on the front end face of the second inflow pipe 320. After the heat exchange medium flows into the second inflow pipe 320 through the second inflow port 321, it flows from front to rear along the second inflow pipe 320 and into each second inflow end 220.

The second inflow space 221 is a cavity space formed within the second inflow end 220.

The second inflow space 221 communicating the second inflow pipe 320 with the second heat exchange space 210 means that the heat exchange medium flowing in the second inflow pipe 320 can flow into the second inflow space 221 and then into the second heat exchange space 210 through the second inflow space 221, achieving heat exchange with the battery units.

A second baffle plate 530 being provided in the second inflow space 221 close to the second inflow port 321 means, for example, as shown in FIG. 4, that the second heat exchange members 200 are arranged from front to rear, and the second inflow ends 220 are also arranged from front to rear. The second inflow space 221 close to the second inflow port 321 may be the second inflow space 221 of one or more second inflow ends 220 located at the front. For example, if the number of second heat exchange members 200 is five, the second inflow spaces 221 of the first three second inflow ends 220 each are provided with the second baffle plate 530, while the second inflow spaces 221 of the last two second inflow ends 220 each are not provided with the second baffle plate 530. Alternatively, the second inflow space 221 of the first one, the first two, or the first four second inflow ends 220 each may be provided with the second baffle plate 530, with the second inflow spaces 221 of the remaining second inflow ends 220 not provided with the second baffle plate 530. Still alternatively, one or two of the second inflow spaces 221 of the first three second inflow ends 220 each are provided with the second baffle plate 530, with the second inflow spaces 221 of the remaining second inflow ends 220 not provided with the second baffle plate 530. The specific arrangement may be selected based on actual needs, which is not limited herein. Additionally, the number of second heat exchange members 200 may be two, three, four, or five or more, which is not limited herein.

The second baffle plate 530 being configured to increase the resistance to the heat exchange medium flowing into the second heat exchange space 210 means that the second baffle plate 530 can reduce the flow area of the heat exchange medium passing through the second inflow space 221, thereby increasing the resistance to the heat exchange medium flowing through the second inflow space 221, reducing the heat exchange medium flowing into the second heat exchange space 210.

It should be noted that during the process of the heat exchange medium flowing from front to rear along the second inflow pipe 320, the resistance to the heat exchange medium flowing into the second heat exchange space 210 on the front side is low, while the resistance to the heat exchange medium flowing into the second heat exchange space 210 on the rear side is high, resulting in a flow distribution of the heat exchange medium in the front-rear direction that is higher at the front and lower at the rear. This causes differences in the flow rates of the heat exchange medium participating in heat exchange between different rows of battery units, leading to significant temperature differences between different rows of battery units.

In the heat exchange assembly 1 of this embodiment of the present application, by providing the second baffle plate 530 in the second inflow space 221 close to the second inflow port 321, the second baffle plate 530 can increase the resistance to the heat exchange medium flowing into the second heat exchange space 210 on the front side, enabling more heat exchange medium to flow into the second heat exchange space 210 on the rear side, thereby improving the uneven front-rear distribution of the heat exchange medium, enhancing the uniformity of the front-rear distribution of the heat exchange medium, and reducing the temperature difference between different rows of battery units.

In yet another possible design, the first inflow pipe 310 is configured with a first inflow port 311, the first inflow end 111 is configured with a first inflow space 1111, the first inflow space 1111 communicates the first inflow pipe 310 with the first heat exchange space 1001, and a first baffle plate 520 is provided in the first inflow space 1111 close to the first inflow port 311 to increase a resistance to the heat exchange medium flowing into the first heat exchange space 1001; and the second inflow pipe 320 is configured with a second inflow port 321, the second inflow end 220 is configured with a second inflow space 221, the second inflow space 221 communicates the second inflow pipe 320 with the second heat exchange space 210, and a second baffle plate 530 is provided in the second inflow space 221 close to the second inflow port 321 to increase a resistance to the heat exchange medium flowing into the second heat exchange space 210. Similarly, the heat exchange medium of this embodiment of the present application can simultaneously improve the uniformity of the front-rear distribution of the heat exchange medium flowing through the first heat exchange member 100 and the second heat exchange member 200, enhance the uniformity of the front-rear distribution of the heat exchange medium in the entire heat exchange assembly 1, and more effectively reduce the temperature difference between different rows of battery units.

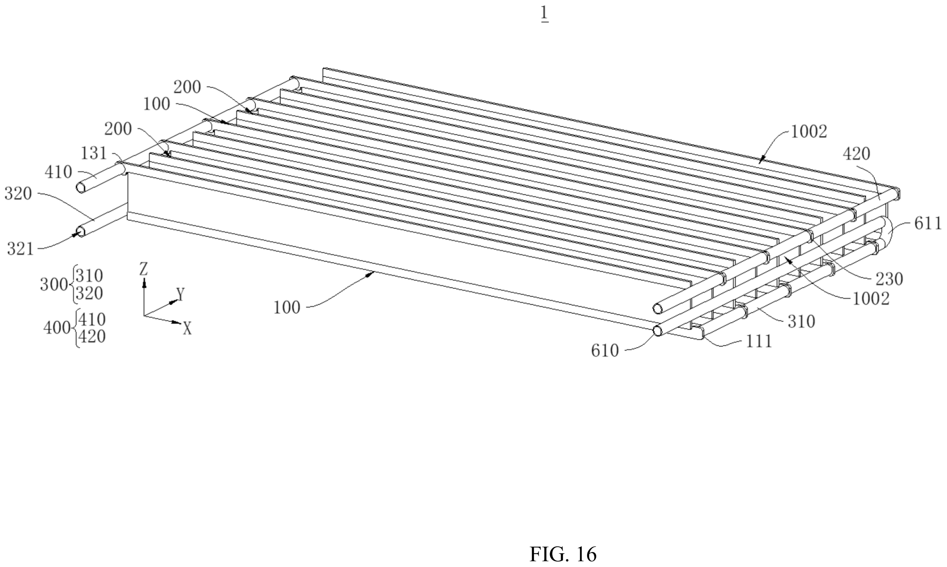

In another embodiment of the present application, referring to FIG. 16, the flow direction of the heat exchange medium in the first inflow pipe 310 of the heat exchange assembly 1 is opposite to the flow direction of the heat exchange medium in the second inflow pipe 320.

The flow direction of the heat exchange medium in the first inflow pipe 310, for example, as shown in FIG. 16, is from rear to front, resulting in a flow distribution of the heat exchange medium flowing through the first heat exchange member 100 that is lower at the front and higher at the rear.

The flow direction of the heat exchange medium in the second inflow pipe 320, for example, as shown in FIG. 16, is from front to rear, resulting in a flow distribution of the heat exchange medium flowing through the second heat exchange member 200 that is higher at the front and lower at the rear.

In the heat exchange assembly 1 of this embodiment of the present application, the flow direction of the heat exchange medium in the first inflow pipe 310 is opposite to the flow direction of the heat exchange medium in the second inflow pipe 320, results in a flow distribution of the heat exchange medium flowing through the first heat exchange member 100 that is lower at the front and higher at the rear, and a flow distribution of the heat exchange medium flowing through the second heat exchange member 200 that is higher at the front and lower at the rear. For different rows of battery units, the total flow rates of the heat exchange medium flowing through the first heat exchange member 100 and the second heat exchange member 200 on opposite sides of each row of battery units are similar, resulting in substantially consistent heat exchange effects for different rows of battery units, thereby reducing the temperature difference between different rows of battery units.

In another embodiment of the present application, referring to FIG. 16, the heat exchange assembly 1 further includes a connecting pipe 610, the first inflow pipe 310 being configured with a first inflow port for the heat exchange medium to flow into the first inflow pipe 310, and the second inflow pipe 320 being configured with a second inflow port 321 for the heat exchange medium to flow into the second inflow pipe 320; and one end of the connecting pipe 610 is in communication with the first inflow port, and the other end of the connecting pipe 610 and the second inflow port 321 are located on the same side of the heat exchange assembly 1.

The connecting pipe 610 is a pipe in communication with the first inflow port.

The first inflow port, for example, as shown in FIG. 16, is an opening on the rear end face of the first inflow end 111; the first inflow port being for the heat exchange medium to flow into the first inflow pipe 310 means that the heat exchange medium flows into the first inflow pipe 310 through the opening on the rear end face of the first inflow pipe 310 and flows forward along the first inflow pipe 310.

The second inflow port 321, for example, as shown in FIG. 16, is an opening on the front end face of the second inflow end 220; the second inflow port 321 being for the heat exchange medium to flow into the second inflow pipe 320 means that the heat exchange medium flows into the second inflow pipe 320 through the opening on the front end face of the second inflow pipe 320 and flows rearward along the second inflow pipe 320. This results in the flow direction of the heat exchange medium in the first inflow pipe 310 being from rear to front, and the flow direction of the heat exchange medium in the second inflow pipe 320 being from front to rear. Thus, the flow direction of the heat exchange medium in the first inflow pipe 310 is opposite to that in the second inflow pipe 320.

One end of the connecting pipe 610 being in communication with the first inflow port means that the heat exchange medium flows from the connecting pipe 610 and then into the first inflow pipe 310 through the first inflow port.

In the heat exchange assembly 1 of this embodiment of the present application, as the other end of the connecting pipe 610 and the second inflow port 321 are located on the same side of the heat exchange assembly 1, the heat exchange medium can be introduced into the connecting pipe 610 and the second inflow port 321 from the same side of the heat exchange assembly 1, facilitating pipe distribution and reducing assembly difficulty.

In another embodiment of the present application, referring to FIG. 16, the outflow pipe assembly 400 of the heat exchange assembly 1 includes a first outflow pipe 410 and a second outflow pipe 420, the first outflow pipe 410 being in communication with the first outflow end 131, the second outflow pipe 420 being in communication with the second outflow end 230, and the first inflow pipe 310, the second outflow pipe 420, and the first inflow end 111 all being located on the same side of the first heat exchange member 100.

The first outflow pipe 410 is a pipe through which the heat exchange medium flows after exiting the first outflow end 131.

The second outflow pipe 420 is a pipe through which the heat exchange medium flows after exiting the second outflow end 230.

The first inflow pipe 310, the second outflow pipe 420, and the first inflow end 111 all being located on the same side of the first heat exchange member 100 means, for example, as shown in FIG. 4 and FIG. 5, that the first inflow end 111, the second outflow end 230, the first inflow pipe 310, and the second outflow pipe 420 are all located on the same side of the heat exchange assembly 1. The pipe distribution of the first inflow pipe 310 and the second outflow pipe 420 is simple, facilitating the communication between the first inflow end 111 and the first inflow pipe 310 and the communication between the second outflow end 230 and the second outflow pipe 420, resulting in a simple structure for the entire heat exchange assembly 1, and facilitating the processing and manufacturing of the heat exchange assembly 1.

In another embodiment of the present application, referring to FIG. 16, the first inflow pipe 310, the connecting pipe 610, and the second outflow pipe 420 of the heat exchange assembly 1 are distributed along the height direction of the first heat exchange member 100, with the connecting pipe 610 located between the first inflow pipe 310 and the second outflow pipe 420. This design reduces the space occupied by the first outflow pipe 410, the connecting pipe 610, and the second inflow pipe 320 in the length direction of the first heat exchange member 100, resulting in good structural compactness for the heat exchange assembly 1 and contributing to increasing the energy density of the battery. In the height direction of the first heat exchange member 100, the first inflow pipe 310, the connecting pipe 610, and the second outflow pipe 420 may be arranged sequentially from top to bottom or from bottom to top. Additionally, the connecting pipe 610 being located between the first inflow pipe 310 and the second outflow pipe 420 makes full use of the space between the first inflow pipe 310 and the second outflow pipe 420, resulting in good structural compactness and contributing to reducing the volume of the heat exchange assembly 1 and increasing the energy density of the battery.

In another embodiment of the present application, referring to FIG. 16, the connecting pipe 610 of the heat exchange assembly 1 is configured with a bent end 611 bending toward and being in communication with the first inflow port.

The bent end 611 refers to a bent section of the connecting pipe 610, where the bent end 611 may be in the shape of a fold line, a curve, or the like. The bent end 611 being semi-circular results in a smooth shape for the bent end 611, ensuring good flow smoothness for the heat exchange medium in the bent end 611, and a regular shape facilitates processing and manufacturing.

In the heat exchange assembly 1 of this embodiment of the present application, the end of the connecting pipe 610 is bent to form the bent end 611 and then is directly connected to the first inflow port of the first inflow pipe 310, resulting in a simple pipe connection operation between the connecting pipe 610 and the first inflow pipe 310 and a simple and compact pipe layout, and contributing to reducing the volume of the heat exchange assembly 1 and increasing the energy density of the battery.

In another embodiment of the present application, referring to FIG. 4 and FIG. 5, the second inflow pipe 320, the first outflow pipe 410, and the second inflow end 220 of the heat exchange assembly 1 are all located on the same side of the first heat exchange member 100.

The second inflow pipe 320, the first outflow pipe 410, the first outflow end 131, and the second inflow end 220 all being located on the same side of the heat exchange medium results in a simple pipe distribution for the second inflow pipe 320 and the first outflow pipe 410, facilitating the communication between the first outflow end 131 and the first outflow pipe 410 and the communication between the second inflow end 220 and the second inflow pipe 320, resulting in a simple structure for the entire heat exchange assembly 1, and facilitating the processing and manufacturing of the heat exchange assembly 1.

In another embodiment of the present application, referring to FIG. 4 and FIG. 5, the second inflow pipe 320 and the first outflow pipe 410 of the heat exchange assembly 1 are distributed along the height direction of the first heat exchange member 100. This design reduces the space occupied by the second outflow pipe 420 and the first inflow pipe 310 in the length direction of the first heat exchange member 100, resulting in good structural compactness for the heat exchange assembly 1 and contributing to increasing the energy density of the battery. In the height direction of the first heat exchange member 100, the second outflow pipe 420 may be located above the first inflow pipe 310, or the second outflow pipe 420 may be located below the first inflow pipe 310. In an embodiment, a first heat exchange circuit is in communication between the first inflow pipe 310 and the first outflow pipe 410. When the first heat exchange circuit can heat the heat exchange medium, the heat exchange medium flowing out of the first outflow pipe 410 flows into the first heat exchange circuit for heating, then flows into the first heat exchange space 1001 through the first inflow pipe 310 to heat the battery units, achieving heating of the battery units and recycling of the heat exchange medium. When the first heat exchange circuit can cool the heat exchange medium, the heat exchange medium flowing out of the first outflow pipe 410 flows into the first heat exchange circuit for cooling, then flows into the first heat exchange space 1001 through the first inflow pipe 310 to cool the battery units, achieving cooling of the battery units and recycling of the heat exchange medium. Similarly, a second heat exchange circuit is in communication between the second inflow pipe 320 and the second outflow pipe 420. When the second heat exchange circuit can heat the heat exchange medium, the heat exchange medium flowing out of the second outflow pipe 420 flows into the second heat exchange circuit for heating, then flows into the second heat exchange space 210 through the second inflow pipe 320 to heat the battery units, achieving heating of the battery units and recycling of the heat exchange medium. When the second heat exchange circuit can cool the heat exchange medium, the heat exchange medium flowing out of the second outflow pipe 420 flows into the second heat exchange circuit for cooling, then flows into the second heat exchange space 210 through the second inflow pipe 320 to cool the battery units, achieving cooling of the battery units and recycling of the heat exchange medium. The first heat exchange circuit and the second heat exchange circuit may be the same circuit or two different circuits, which is not limited herein.

In a specific embodiment, referring to FIG. 4 and FIG. 5, the number of first heat exchange members 100 is five, and the number of second heat exchange members 200 is five. The five first heat exchange members 100 and the five second heat exchange members 200 are alternately arranged at intervals from front to rear, with the first inflow pipe 310 and the second outflow pipe 420 located on the right side of the heat exchange assembly 1, the second outflow pipe 420 and the first inflow pipe 310 arranged vertically, the second inflow pipe 320 and the first outflow pipe 410 located on the left side of the heat exchange assembly 1, and the first outflow pipe 410 and the second inflow pipe 320 arranged vertically. This layout can reduce the left-right dimensions of the heat exchange assembly 1, making the structure more compact.

In this specific embodiment, the communication method between the first inflow end 111 and the first inflow pipe 310 is specifically as follows: for example, as shown in FIG. 4, FIG. 6, and FIG. 9, both the front and rear side faces of the first inflow end 111 are provided with a first opening 1112 being in communication with the first inflow space 1111, the first inflow pipe 310 is a multi-segment structure, with a segment of the first inflow pipe 310 connected between two adjacent first inflow ends 111, and two ends of each segment of the first inflow pipe 310 respectively docked with the first openings 1112 oppositely arranged in the two adjacent first inflow ends 111 to communicate the first inflow end 111 with the first inflow space 1111. In this way, as the heat exchange medium flows from front to rear in the first inflow pipe 310, the heat exchange medium flows into the first inflow space 1111 through the first opening 1112 on the front side of the first inflow end 111, with a portion of the heat exchange medium flowing into the first heat exchange space 1001, and another portion flowing out through the first opening 1112 on the rear side of the first inflow end 111, thereby flowing into the subsequent first heat exchange member 100, achieving communication between the first inflow pipe 310 and the first inflow space 1111. In another embodiment, the first inflow pipe 310 may not be multi-segmented. The outer peripheral wall of the first inflow pipe 310 is provided with a plurality of openings, each first inflow end 111 is provided with an opening being in communication with the first inflow channel, and the openings of the first inflow pipe 310 are in communication with the openings of the first inflow ends 111 in a one-to-one correspondence, also achieving communication between the first inflow pipe 310 and the first inflow end 111. Of course, in other embodiments, other communication methods may be used, which are not limited herein. The communication between the first outflow pipe 410 and the first outflow end 131 may adopt the same communication method as that between the first inflow pipe 310 and the first inflow end 111, or a different method, which may be selected based on actual needs.

In this specific embodiment, the communication method between the second inflow end 220 and the second inflow pipe 320 is specifically as follows: for example, as shown in FIG. 4, FIG. 6, and FIG. 9, both the front and rear side faces of the second inflow end 220 are provided with a second opening 222 being in communication with the second inflow space 221, the second inflow pipe 320 is a multi-segment structure, with a segment of the second inflow pipe 320 connected between two adjacent second inflow ends 220, and two ends of each segment of the second inflow pipe 320 are respectively docked with the second openings 222 oppositely arranged in the two adjacent second inflow ends 220 to communicate the second inflow end 220 with the second inflow space 221. In this way, as the heat exchange medium flows from front to rear in the second inflow pipe 320, the heat exchange medium flows into the second inflow space 221 through the second opening 222 on the front side of the second inflow end 220, with a portion of the heat exchange medium flowing into the second heat exchange space 210, and another portion flowing out through the second opening 222 on the rear side of the second inflow end 220, thereby flowing into the subsequent second heat exchange member 200, achieving communication between the second inflow pipe 320 and the second inflow space 221.

In another embodiment, the second inflow pipe 320 may not be multi-segmented. The outer peripheral wall of the second inflow pipe 320 provided with a plurality of openings, each second inflow end 220 is provided with an opening being in communication with the second inflow channel, and the openings of the second inflow pipe 320 are in communication with the openings of the second inflow ends 220 in a one-to-one correspondence, also achieving communication between the second inflow pipe 320 and the second inflow end 220. Of course, in other embodiments, other communication methods may be used, which are not limited herein. The communication between the second outflow pipe 420 and the second outflow end 230 may adopt the same communication method as that between the second inflow pipe 320 and the second inflow end 220, or a different method, which may be selected based on actual needs.

The connection methods between the first inflow pipe 310 and the first inflow end 111, between the first outflow pipe 410 and the first outflow end 131, between the second inflow pipe 320 and the second inflow end 220, and between the second outflow pipe 420 and the second outflow end 230 may include, but are not limited to, bolt connection, adhesion, snap connection, riveting, welding, or integral molding. Integral molding refers to forming using integrated processes such as extrusion, injection molding, or die casting.

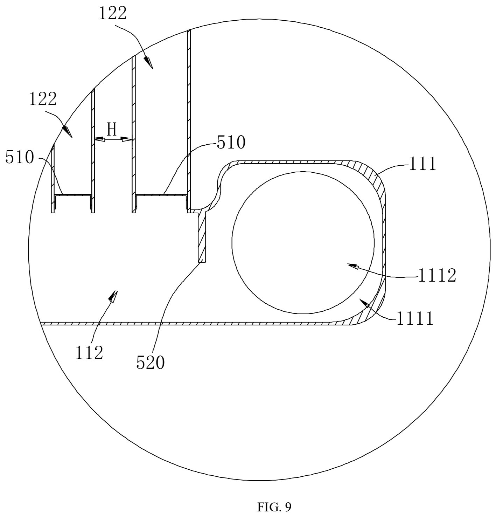

In this specific embodiment, referring to FIG. 9, in the five first heat exchange members 100, the first inflow space 1111 communicates with the inflow channel 112, and the first three first inflow spaces 1111 each are provided with the first baffle plate 520, where the first baffle plates 520 are disposed close to the inflow channel 112, and the first baffle plates 520 extend downward from the upper wall surface of the first inflow space 1111, thereby reducing the flow area of the heat exchange medium flowing into the inflow channel 112, improving the uniformity of the front-rear distribution of the heat exchange medium, and reducing the temperature difference between different rows of battery units.

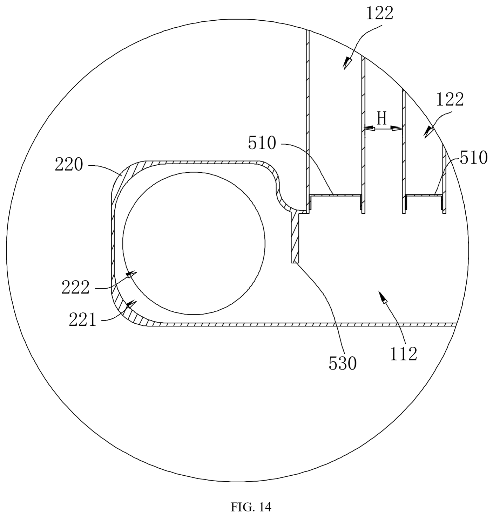

In this specific embodiment, in the five second heat exchange members 200, referring to FIG. 14, the second inflow space 221 communicates with the inflow channel 112, and the first two second inflow spaces 221 each are provided with the second baffle plate 530, where the second baffle plates 530 are disposed close to the inflow channel 112, and the second baffle plates 530 extend downward from the upper wall surface of the second inflow space 221, thereby reducing the flow area of the heat exchange medium flowing into the inflow channel 112, improving the uniformity of the front-rear distribution of the heat exchange medium, and reducing the temperature difference between different rows of battery units.

In another specific embodiment, referring to FIG. 16, the number of first heat exchange members 100 is five, and the number of second heat exchange members 200 is five. The five first heat exchange members 100 and the five second heat exchange members 200 are alternately arranged at intervals from front to rear, with the first inflow pipe 310, the connecting pipe 610, and the second outflow pipe 420 located on the right side of the heat exchange assembly 1, the second outflow pipe 420, the connecting pipe 610, and the first inflow pipe 310 arranged vertically, the second inflow pipe 320 and the first outflow pipe 410 located on the left side of the heat exchange assembly 1, and the first outflow pipe 410 and the second inflow pipe 320 arranged vertically. This layout can reduce the left-right dimensions of the heat exchange assembly 1, making the structure more compact.

In another embodiment of the present application, a battery is provided. The battery includes the heat exchange assembly 1 described above.

The battery of this embodiment of the present application employs the above-mentioned heat exchange assembly 1, resulting in a small temperature difference between battery units in the same row of battery units, which contributes to improving the performance of the battery.

Since the battery of this embodiment of the present application may adopt any one or several of the technical solutions described in the above embodiments, it likewise has all the beneficial effects brought by the technical solutions of the above embodiments, which will not be repeated herein.

In another embodiment of the present application, as shown in FIG. 1, a vehicle 1000 is provided. The vehicle 1000 includes the above-mentioned battery 1100.

The vehicle 1000 of this embodiment of the present application employs the above-mentioned battery 1100. The battery 1100 has good heat exchange performance, which contributes to improving the performance of the battery 1100 and also contributes to improving the performance of the vehicle 1000.

Since the vehicle 1000 of this embodiment of the present application may adopt any one or several of the technical solutions described in the above embodiments, it likewise has all the beneficial effects brought by the technical solutions of the above embodiments, which will not be repeated herein.

In another embodiment of the present application, an electric device is provided. The electric device includes the above-mentioned battery.

The electric device of this embodiment of the present application employs the battery described above. The battery has good performance, which also contributes to improving the performance of the electric device.

Since the electric device of this embodiment of the present application may adopt any one or several of the technical solutions described in the above embodiments, it likewise has all the beneficial effects brought by the technical solutions of the above embodiments, which will not be repeated herein.

The foregoing descriptions are merely preferable embodiments of the present application, but are not intended to limit the present application. Any modification, equivalent replacement, or improvement made without departing from the spirit and principle of the present application shall fall within the protection scope of the present application.

## Claims

1. A heat exchange assembly comprising:
at least one first heat exchange member, the first heat exchange member being configured with a first inflow end, a first outflow end, and a first heat exchange space for a heat exchange medium to flow, wherein the first inflow end and the first outflow end are both in communication with the first heat exchange space;
at least one second heat exchange member, the second heat exchange member being configured with a second inflow end, a second outflow end, and a second heat exchange space for the heat exchange medium to flow, wherein the second inflow end and the second outflow end are both in communication with the second heat exchange space; wherein
the first heat exchange member and the second heat exchange member are arranged alternately, and an accommodation space is configured between an adjacent first heat exchange member and second heat exchange member; and
the first inflow end and the second outflow end are located on the same side of the first heat exchange member, and the second inflow end and the first outflow end are located on the same other side of the first heat exchange member;
an inflow pipe assembly, the first inflow end and the second inflow end being both in communication with the inflow pipe assembly; and
an outflow pipe assembly, the first outflow end and the second outflow end being both in communication with the outflow pipe assembly.

2. The heat exchange assembly according to claim 1, wherein the first heat exchange member comprises a first manifold, a heat exchange body, and a second manifold, the heat exchange body being connected between the first manifold and the second manifold, the heat exchange body being configured with the first heat exchange space, the first manifold being configured with an inflow channel and the first inflow end, and the second manifold being configured with an outflow channel and the first outflow end; wherein the inflow channel communicates the first inflow end with the first heat exchange space; and the outflow channel communicates the first outflow end with the first heat exchange space.

3. The heat exchange assembly according to claim 2, wherein the first heat exchange space is configured with multiple heat exchange channels for communicating the inflow channel and the outflow channel, wherein the inflow channel, the heat exchange channels, and the outflow channel are arranged along a height direction of the first heat exchange member, the inflow channel extends from the first inflow end along a length direction of the first heat exchange member toward the first outflow end, the outflow channel extends from the first outflow end along the length direction of the first heat exchange member toward the first inflow end, and the plurality of heat exchange channels are arranged at intervals along the length direction of the first heat exchange member.

4. The heat exchange assembly according to claim 3, wherein the heat exchange channels extend along the height direction of the first heat exchange member.

5. The heat exchange assembly according to claim 3 or 4, wherein the multiple heat exchange channels have the same width.

6. The heat exchange assembly according to any one of claims 3 to 5, wherein some of the heat exchange channels each are provided with a sealing member for sealing the heat exchange channel;
the heat exchange body is divided into multiple heat exchange segments along the length direction of the first heat exchange member; and
in a flow direction of the heat exchange medium in the inflow channel, the number of sealing members in the heat exchange segments gradually decreases.

7. The heat exchange assembly according to claim 6, wherein the sealing members in at least one of the heat exchange segments are arranged at uniform intervals.

8. The heat exchange assembly according to claim 3 or 4, wherein in the flow direction of the heat exchange medium in the inflow channel, the widths of the heat exchange channels gradually increase.

9. The heat exchange assembly according to any one of claims 2 to 8, wherein the outflow channel is located above the heat exchange channels, and the inflow channel is located below the heat exchange channels.

10. The heat exchange assembly according to any one of claims 2 to 9, wherein the first manifold and the heat exchange body are of a split structure; and/or the second manifold and the heat exchange body are of a split structure.

11. The heat exchange assembly according to any one of claims 2 to 9, wherein a portion of an end of the first manifold protruding outside the heat exchange body forms the first inflow end; and/or a portion of an end of the second manifold protruding outside the heat exchange body forms the first outflow end.

12. The heat exchange assembly according to any one of claims 1 to 11, wherein the first outflow end is higher than the first inflow end; and/or the second outflow end is higher than the second inflow end.

13. The heat exchange assembly according to any one of claims 1 to 12, wherein the first heat exchange member and the second heat exchange member are rotationally symmetric.

14. The heat exchange assembly according to any one of claims 1 to 13, wherein the inflow pipe assembly comprises a first inflow pipe and a second inflow pipe, the first inflow pipe being in communication with the first inflow end, and the second inflow pipe being in communication with the second inflow end.

15. The heat exchange assembly according to claim 14, wherein
the first heat exchange member is provided in plurality, the second heat exchange member is provided in plurality, and an alternating arrangement direction of the first heat exchange members and the second heat exchange members is a first direction;
the first inflow pipe extends along the first direction and is sequentially in communication with each of the first inflow ends; and
the second inflow pipe extends along the first direction and is sequentially in communication with each of the second inflow ends.

16. The heat exchange assembly according to claim 15, wherein the first inflow pipe is configured with a first inflow port, the first inflow end is configured with a first inflow space communicating the first inflow pipe with the first heat exchange space, and a first baffle plate is provided in the first inflow space close to the first inflow port to increase a resistance to the heat exchange medium flowing into the first heat exchange space; and/or
the second inflow pipe is configured with a second inflow port, the second inflow end is configured with a second inflow space communicating the second inflow pipe with the second heat exchange space, and a second baffle plate is provided in the second inflow space close to the second inflow port to increase a resistance to the heat exchange medium flowing into the second heat exchange space.

17. The heat exchange assembly according to claim 15 or 16, wherein the flow direction of the heat exchange medium in the first inflow pipe is opposite to the flow direction of the heat exchange medium in the second inflow pipe.

18. The heat exchange assembly according to claim 17, wherein the heat exchange assembly further comprises a connecting pipe, the first inflow pipe being configured with a first inflow port for the heat exchange medium to flow into the first inflow pipe, and the second inflow pipe being configured with a second inflow port for the heat exchange medium to flow into the second inflow pipe; and
one end of the connecting pipe is in communication with the first inflow port, and the other end of the connecting pipe and the second inflow port are located on the same side of the heat exchange assembly.

19. The heat exchange assembly according to claim 18, wherein the outflow pipe assembly comprises a first outflow pipe and a second outflow pipe, the first outflow pipe being in communication with the first outflow end, the second outflow pipe being in communication with the second outflow end, and the first inflow pipe, the second outflow pipe, and the first inflow end all being located on the same side of the first heat exchange member.

20. The heat exchange assembly according to claim 19, wherein the first inflow pipe, the connecting pipe, and the second outflow pipe are distributed along the height direction of the first heat exchange member, with the connecting pipe located between the first inflow pipe and the second outflow pipe.

21. The heat exchange assembly according to claim 20, wherein the connecting pipe is configured with a bent end bending toward and being in communication with the first inflow port.

22. The heat exchange assembly according to any one of claims 19 to 21, wherein the second inflow pipe, the first outflow pipe, and the second inflow end are all located on the same side of the first heat exchange member.

23. The heat exchange assembly according to claim 22, wherein the second inflow pipe and the first outflow pipe are distributed along the height direction of the first heat exchange member.

24. A battery comprising the heat exchange assembly according to any one of claims 1 to 23.

25. A vehicle comprising the battery according to claim 24.

26. An electric device comprising the battery according to claim 24.
